(19) Europäisches Patentamt
European Patent Office
Office européen des brevets

(11) **EP 4 722 766 A1**

(12) **EUROPÄISCHE PATENTANMELDUNG**

(43) Veröffentlichungstag:
08.04.2026 Patentblatt 2026/15

(21) Anmeldenummer: 25206001.7

(22) Anmeldetag: 01.10.2025

(51) Internationale Patentklassifikation (IPC):
*G01V 8/12* (2006.01)   *G01V 8/20* (2006.01)
*G01B 11/24* (2006.01)   *G01F 22/00* (2006.01)
*B23Q 17/24* (2006.01)

(52) Gemeinsame Patentklassifikation (CPC):
**G01V 8/12; B23Q 17/2457; G01B 11/2433;
G01F 1/661; G01F 22/00; G01P 5/18; G01V 8/20;**
B23Q 17/2485; G01N 2013/0241

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **02.10.2024 DE 102024128491**

(71) Anmelder: **droptical GmbH
90469 Nürnberg (DE)**

(72) Erfinder:
• **Wanka, Thomas
90469 Nürnberg (DE)**
• **Heelein, Jonas
90469 Nürnberg (DE)**
• **Leininger, Matthias
90469 Nürnberg (DE)**
• **Föste, Daniel
90469 Nürnberg (DE)**

(74) Vertreter: **Hafner & Kohl PartmbB
Schleiermacherstraße 25
90491 Nürnberg (DE)**

(54) **VERFAHREN ZUM ERFASSEN WENIGSTENS EINES OBJEKTS**

(57) Verfahren zum Erfassen wenigstens eines Objekts (2), mit den folgenden Verfahrensschritten:
- Aussenden wenigstens eines Lichtstrahls (3, 4), der das wenigstens eine zu erfassende Objekt (2) belichtet,
- Erfassen, insbesondere eines Konturabschnitts, des wenigstens einen Objekts (2) durch ein Auftreffen des wenigstens einen Lichtstrahls (3, 4) und/oder durch ein Abbilden eines durch eine Belichtung des wenigstens einen Objekts (2) mit dem Lichtstrahl (3, 4) erzeugten Schattenabschnitts (5) auf wenigstens einem optischen Sensor (10, 10'),
- Ausführen einer Relativbewegung (6) zwischen dem wenigstens einen Objekt (2) und dem optischen Sensor (10, 10') während des Erfassens, wobei
- als wenigstens ein optischer Sensor (10, 10') ein ereignisbasierter Bildsensor (11) verwendet wird.

Fig. 1

**Beschreibung**

Die Erfindung betrifft ein Verfahren zum Erfassen wenigstens eines sich bewegenden Objekts.

Entsprechende Verfahren zum Erfassen wenigstens eines Objekts sind aus dem Stand der Technik dem Grunde nach bekannt. So ist es bekannt, im Durchlichtverfahren ein Objekt zu belichten und das das Objekt belichtende Licht, ohne eine Reflexion oder ohne wesentliche Reflexionsanteile an dem Objekt, auf einem Sensor zu erfassen oder einen Schatten, des Objekts, der durch die Belichtung des Objekts erzeugt wird, auf dem Sensor zu erfassen. Nachteilig hierbei ist, dass die hierzu eingesetzten Sensoren eine gewisse Trägheit aufweisen und stets ein Abbild des gesamten Bildausschnitts erzeugt wird.

Der Erfindung liegt die Aufgabe zugrunde, ein Objekt so zu erfassen, dass genauere Informationen zu dessen Volumen und/oder zu dessen Bewegungsrichtung erfasst werden können.

Die Aufgabe wird durch ein Verfahren zum Erfassen wenigstens eines Objekts Anspruch 1 gelöst. Die hierzu abhängigen Ansprüche betreffen mögliche Ausführungsformen des Verfahrens. Ferner wird die Aufgabe durch eine Vorrichtung gemäß Anspruch 14 sowie durch eine Anordnung gemäß Anspruch 15 gelöst.

Die Erfindung betrifft ein Verfahren zum Erfassen wenigstens eines, insbesondere sich bewegenden, Objekts. Hierzu erfolgt ein Aussenden wenigstens eines Lichtstrahls, der das zu erfassende Objekt belichtet. Mit anderen Worten trifft der wenigstens eine Lichtstrahl auf das, insbesondere sich bewegende, Objekt. In einem weiteren Verfahrensschritt erfolgt ein Erfassen, insbesondere eines Konturabschnitts, des Objekts durch ein Auftreffen des wenigstens einen Lichtstrahls und/oder durch ein Abbilden eines durch eine Belichtung des wenigstens einen Objekts mit dem Lichtstrahl erzeugten Schattenabschnitts auf wenigstens einem optischen Sensor. Mit anderen Worten trifft wenigstens ein Lichtstrahl auf den optischen Sensor auf, wobei der Lichtstrahl durch das diesen treffende Objekt unterbrochen wird, bzw. dadurch ein Schatten durch das Objekt gebildet wird und damit eine Unterbrechung des Auftreffens des Lichtstrahls auf den optischen Sensor einhergeht. Alternativ oder zusätzlich liegt ein Zustand vor, in welchem ein Schatten des Objekts, welcher dadurch erzeugt wird, dass, da das Objekt zwischen dem Lichtstrahl und dem optischen Sensor liegt, aufgehoben werden aufgrund einer Relativbewegung zwischen dem Objekt und dem optischen Sensor, sodass eine bestehende Abschattung des optischen Sensors aufgehoben wird. Vorzugsweise kann der optischen Sensor ortsfest vorliegen und das Objekt eine Bewegung ausführen. Hierbei betrifft das Abschatten und/oder das Belichten des optischen Sensors beispielsweise einzelne Pixel von einer Erfassungsfläche des optischen Sensors. Damit liegt währen des Erfassens des wenigstens einen Objekts eine Relativbewegung zwischen dem wenigstens einen Objekt und dem optischen Sensor vor. Erfindungsgemäß wird als wenigstens ein optischer Sensor ein ereignisbasierter Bildsensor verwendet. Ein ereignisbasierter Bildsensor, auch als "event-based vision sensor" oder als "event camera" bezeichnet, ist ein spezieller Lichtsensor, der auf Änderungen in der Umgebungshelligkeit reagiert. Herkömmliche, zeitgesteuerte Videokameras, die beispielsweise auf CCD-Sensoren beruhen, nehmen pro Zeitschritt ein ganzes Einzelbild auf, wobei die Bildrate extern vorgegeben wird. Im Gegensatz dazu misst ein ereignisbasierter Bildsensor die Veränderung der Helligkeit einer Szene bzw. eines erfassten Objekts basierend auf einzelnen Bildpunkten und zeigt diese, insbesondere bei hinreichendem Betrag, an. Die Bildpunkte bzw. Pixel können hierbei unabhängig voneinander und/oder asynchron bewertet werden. Hierbei kann eine Sensorinformation gewonnen bzw. erzeugt werden, die, insbesondere ausschließlich, eine Veränderung bzw. eine Bewegung beschreibt. Ein ereignisbasierter Bildsensor bildet damit typischerweise nicht sämtliche Bildpunkte stets ab, sondern seine Bildinformation betrifft die sich verändernden Bildpunkte. Die Bildpunkte, die keiner Veränderung unterliegen, können dabei ausgespart werden, sodass sich die Bildinformation des ereignisbasierten Bildsensors geringer im vergleich zu einem CCD-Sensor geringer ist und/oder schneller und/oder einfacher verarbeitet werden kann.

Eine Leuchteinrichtung kann zum Aussenden wenigstens eines Lichtstrahls eingesetzt werden, dabei kann die Leuchteinrichtung beispielsweise als Backlight ausgebildet sein bzw. als ein solches betrachtet werden. Damit kann beispielsweise eine flächige Belichtung des Objekts im Erfassungsbereich erfolgen. Damit kann ein Lichtstrahl beispielsweise auch als ein flächig leuchtendes und in eine Richtung ausstrahlendes, insbesondere als ein Bündel eines parallel ausstrahlenden, Lichts betrachtet werden. Die Relativbewegung zwischen dem optischen Sensor und dem wenigstens einen Objekt kann beispielsweise eine lineare Bewegung umfassen. Alternativ oder zusätzlich kann zumindest abschnittsweise eine (a), insbesondere ausschließlich, drehende und/oder (b) eine überlagerte drehende und lineare Bewegung vorliegen.

Dadurch, dass der wenigstens eine Lichtstrahl das Objekt bzw. den das Objekt umfassenden Erfassungsbereich kreuzt, bevor der wenigstens eine Lichtstrahl auf dem optischen Sensor auftrifft, kann beispielsweise von einem Durchlichtverfahren gesprochen werden. Insbesondere wird bei einem Durchlichtverfahren nicht oder nur in einem geringen Maß bzw. nicht primär mittels einer Objektreflexion des Lichts, der Lichtstrahl zu dem optischen Sensor gelenkt bzw. geführt. Beim Durchlichtverfahren trifft das am Objekt im Erfassungsbereich vorbeigeführte Licht, ohne Reflexion oder mit nur geringem Reflexionsanteil auf der Oberfläche des Objekts, auf dem optischen Sensor auf. Mit anderen Worten wird durch den wenigstens einen Lichtstrahl die Konturform des Objekts über den Übergang des das Objekt nicht treffenden Lichts zu dem durch Objekt und den Lichtstrahl gebildeten Schatten auf dem optischen Sensor abgebildet bzw. erfasst.

Dadurch, dass ein ereignisbasierter Bildsensor zum Einsatz kommt, kann ein wesentlich schnelleres Erfassen erfolgen bzw. ein mehr und/oder eine andere Art an Informationen über ein sich relativ zu einem optischen Sensor bewegendes Objekt erfasst werden. Zwar fehlen bei einem ereignisbasierten Bildsensor Informationen zu solchen Bereichen, die keine Helligkeitsänderung (Bewegungsänderung) erfahren, jedoch kann die vermittels dem ereignisbasierten Bildsensor gewonnene Information für bestimmte Auswertungszwecke dennoch vorteilhaft sein und/oder Bildinformationen konventioneller Bildsensoren, z. B. CCD-Sensoren, ergänzen.

Es ist möglich, dass das wenigstens eine Objekt im Durchlichtverfahren von dem wenigstens einen Lichtstrahl angestrahlt und zumindest abschnittsweise am optischen Sensor erfasst wird. Als Durchlichtverfahren ist zu verstehen, dass die Belichtung des Senors nicht primär durch das von Objektreflexion zurückgeworfene Licht entsteht. Alternativ oder zusätzlich kann das wenigstens eine Objekt vermittels einem Auflichtverfahren und/oder vermittels einem Dunkelfeldverfahren beleuchtet bzw. vermittels der Lichtstrahlen an dem optischen Sensor erfasst werden.

Das Prinzip einer Beleuchtung vermittels eines Dunkelfeldverfahrens beruht darauf, dass Objekte Licht nicht nur absorbieren, sondern auch immer einen Teil des Lichtstrahls ablenken. Beispielsweise kann die Beleuchtung so eingestellt werden, dass die direkten Lichtstrahlen am optischen Sensor vorbeigehen, sodass nur das abgelenkte Licht auf der Sensorfläche des optischen Sensor auftrifft. Optional kann die Beleuchtung des Objekts (a) vom optischen Sensor aus betrachtet von hinter dem Objekt erfolgen (Durchlicht) und/oder (b) von der Sensorseite (Auflicht) und/oder (c) auch seitlich. Damit kann beispielsweise ein Durchlicht- und/oder Auflicht-Dunkelfeld-Verfahren zur Anwendung kommen. Mit anderen Worten kann das wenigstens eine zu erfassende Objekt zumindest teilweise, bevorzugt überwiegend, besonders bevorzugt ausschließlich, vermittels des wenigstens einen Lichtstrahls im Durchlicht bzw. im Durchlichtverfahren und/oder in einem Auflicht bzw. in einem Auflichtverfahren und/oder in einer Dunkelfeldbelichtung bzw. in einem Dunkelfeldverfahren belichtet werden.

Beispielsweise kann der wenigstens eine Lichtstrahl sequenziell bzw. phasenweise das Objekt beleuchten bzw. aktiviert werden und/oder in einem Dauerlichtmodus betrieben werden. Ein Vorteil eines Dauerlichtmodus kann in einer schärferen Abbildung und/oder in einer genaueren Erfassung über den zeitlichen Verlauf angesehen werden.

Beispielsweise wird das Verfahren dazu genutzt, um ein, insbesondere sich bewegendes, Objekt zu erfassen, das ein von einer Flüssigkeit gebildeter Tropfen ist. Der Flüssigkeitstropfen kann sich beispielsweise im freien Fall durch einen Erfassungsbereich bewegen, in welchem er von dem wenigstens einen Lichtstrahl belichtet wird. Auch ist es möglich, dass der Tropfen zu keinem Zeitpunkt in seiner gesamten Länge erfasst wird. Alternativ kann wenigstens ein Tropfen, bevorzugt die überwiegende Anzahl der Tropfen, besonders bevorzugt sämtliche Tropfen, gänzlich erfasst werden bzw. mit deren gesamten Umfangskonturform auf der Fläche des optischen Sensor abgebildet werden, falls eine entsprechende Helligkeitsänderung an der Tropfenkontur vorliegt. Wenigstens ein Tropfen, der im freien Fall durch den Erfassungsbereich tritt, kann mit oder ohne Anfangsgeschwindigkeit an einem Randbereich des Erfassungsbereichs vorliegen und den Erfassungsbereich durchtreten. Beispielsweise wird der wenigstens eine Tropfens passiv, z. B. ausschließlich schwerkraftbedingt, aus einer Düse ausgebracht. Alternativ kann der wenigstens eine Tropfen druckgestützt aus einer Düse ausgebracht und ihm damit eine Anfangsgeschwindigkeit aufgeprägt werden.

Es ist möglich, dass als zu erfassendes Objekt ein Festkörper verwendet wird bzw. vorliegt. Beispielsweise führt der Festkörper eine um eine Drehachse drehende Bewegung aus. Die Drehachse kann beispielsweise innerhalb des Volumens des Objekts angeordnet sein. Das als Festkörper ausgebildete Objekt kann beispielsweise ein Rotationskörper sein und/oder eine rotationssymmetrische, insbesondere kreisförmige, Hüllgrundfläche und/oder ein rotationssymmetrisches und/oder kreiszylindrisches Hüllvolumen aufweisen. Bevorzugt ist die Drehachse des Objekts derart ausgebildet, dass diese mit einer Rotationsachse des Rotationskörpers zusammenfällt. In einer beispielhaften Ausführungsform ist das sich bewegende und zu erfassende Objekt als ein Fräser, also als ein Fräswerkzeug, ausgebildet. Beispielsweise wird das Fräswerkzeug, während es eine um seine Drehachse drehende Bewegung ausführt, von dem wenigstens einen Lichtstrahl belichtet und das Schattenbild bzw. eine aufgrund des das Objekt kreuzenden Lichtstrahls eine Sensorinformation an dem optischen Sensor erzeugt. Dadurch, dass das Fräswerkzeug eine kontinuierliche Drehbewegung ausführt, kann diese Bewegung aufgrund der stetigen Veränderung durch den ereignisbasierten Bildsensor erfasst werden. Das als Fräswerkzeug eingesetzte Objekt kann beispielsweise während der Belichtung auf einer Fräsmaschine oder einem Bearbeitungszentrum eingesetzt werden. Das Fräswerkzeug zeichnet sich dadurch aus, dass es zur Bearbeitung senkrecht und/oder schräg zur Rotationsachse bewegt wird und damit eine spanabhebende Bearbeitung eines Werkstücks ermöglicht. Typischerweise kann die drehende Bewegung des Fräswerkzeugs mit einer senkrecht zur Rotationsachse ausgerichteten Vorschubbewegung des Fräswerkzeugs überlagert sein, sodass die Erfassung während dem Ausführen der überlagerten Vorschub-und-Drehbewegung erfolgen kann. Alternativ kann als Hintergrundinformation eine Bewegung eines zu fräsenden Zweitobjekts durch eine Beaufschlagung mit dem wenigstens einen Lichtstrahl, insbesondere mit dem das zu erfassende Objekt bzw. das als Fräswerkzeug ausgebildete Objekt beaufschlagenden Lichtstrahls belichtet und damit eine Sensorinformation an dem optischen Sensor erzeugt werden. Damit können aus der Sensorinformation Informationen zu dem Fräswerkzeug selbst und/oder zu dem zu fräsenden Gegenstand (Zweitobjekt bzw. Werkstück) oder zu sich von dem zu fräsenden Gegenstand gelöster Späne (Zweitobjekt oder Drittobjekt) erfasst bzw. gewonnen werden. In einer optionalen Ausführungsform kann das zu erfassende Objekt ein zerspanendes Werkzeug bzw. ein spanabhebendes Werkzeug, z. B. ein Fräser oder ein Bohrer, sein. In einer weiteren beispielhaften Ausführungsform kann das zu erfassende Objekt ein Bonddraht sein, der an einen Trägerkörper, z. B. eine Leiterplatte, angeordnet und an diesem verbunden wird.

Das sich bewegende Objekt kann beispielsweise eine Breite von maximal 10 mm, bevorzugt maximal 5 mm, besonders bevorzugt maximal 2,0 mm, weiter bevorzugt maximal 1,0 mm, höchst bevorzugt maximal 0,5 mm, aufweisen. Damit kann das Verfahren zum Erfassen eines Objekts in der entsprechenden Größe eingesetzt werden. Beispielsweise weist das zu erfassende Objekt die angegebene Breite als maximale Erstreckung senkrecht zur Bewegungsrichtung auf der Sensorfläche des optischen Sensors auf. Die vorgenannte bzw. angegebene maximale Breite des Objekts kann sich auf die Breite des Objekts im Erfassungsbereich beziehen. Alternativ oder zusätzlich kann die maximale Breite des Objekts dessen Breite auf der optischen Sensorfläche des optischen Sensor betreffen.

Es ist möglich, dass das zu erfassende Objekt sich mit einer Geschwindigkeit $v_B$ im und/oder durch einen Erfassungsbereich bewegt, innerhalb dem das Objekt von dem wenigstens einen Lichtstrahl belichtet wird, wobei die Geschwindigkeit $v_B$ zu einer maximalen Breite des Objekts ein Verhältnis von größer 1000 1/s, bevorzugt größer 2000 1/s, besonders bevorzugt größer 5000 1/s, höchst bevorzugt größer 10000 1/s, aufweist. Damit kann das Verfahren dazu genutzt werden, ein Objekt zu erfassen, dessen Bewegungsgeschwindigkeit zu dessen Breite, insbesondere seiner Erstreckung senkrecht zu seiner Bewegungsrichtung, einem entsprechenden Verhältnis entspricht. Es wurde erkannt, dass es vermittels dem ereignisbasierten Bildsensors ermöglicht wird, relativ kleine und zugleich eine definierte Mindestgeschwindigkeit aufweisende Objekte, insbesondere in Form von Flüssigkeitstropfen, mit einer hinreichenden Genauigkeit zu erfassen. Insbesondere kann die Erfassungsgenauigkeit dazu genutzt werden, das Volumen und/oder die Form und/oder einen Volumenstrom eines Flüssigkeitstropfen zu ermitteln. Die Bewegung im Erfassungsbereich kann beispielsweise zumindest eine Drehung des Objekts, um seine eine Drehachse, umfassen. Alternativ kann das Objekt zur Umwelt ortsfest und der optische Sensor beweglich zur Umwelt gelagert sein, sodass die Relativbewegung zwischen Objekt und optischen Sensor, insbesondere ausschließlich, durch die Bewegung des optischen Sensor ausgeführt wird. Ein erster und wenigstens ein zweiter Lichtstrahl können beispielsweise jeweils das, insbesondere sich bewegende, Objekt belichten, wobei (a) durch Auftreffen des ersten Lichtstrahls und/oder durch Abbilden bzw. Auftreffen eines durch Belichtung des Objekts mit dem ersten Lichtstrahl erzeugten Schattenabschnitts und (b) durch Auftreffen wenigstens des zweiten Lichtstrahls und/oder durch Abbilden bzw. Auftreffen eines durch Belichtung des Objekts mit dem wenigstens einen zweiten Lichtstrahl erzeugten Schattenabschnitts auf wenigstens einem optischen Sensor, bevorzugt auf dem wenigstens einen als ereignisbasierter Bildsensor ausgebildeten optischen Sensor, zumindest ein Abschnitt, z. B. ein Konturabschnitt, des Objekts erfasst wird. Selbstverständlich können auch mehr als zwei Lichtstrahlen, z. B. drei Lichtstrahlen oder vier Lichtstrahlen oder fünf Lichtstrahlen, eingesetzt werden, welche jeweils das zu erfassende Objekt, insbesondere während dessen Bewegung, belichten. Beispielsweise treffen ein erster Lichtstrahl und wenigstens ein zweiter Lichtstrahl bzw. ein durch den ersten und/oder zweiten Lichtstrahl erzeugter Schattenabschnitt des Objekts auf denselben optischen Sensor auf. Bevorzugt treffen (a) ein erster Lichtstrahl und/oder ein durch den ersten Lichtstrahl erzeugter Schatten auf einen ersten Sensorabschnitt des optischen Sensors auf und (b) ein zweiter Lichtstrahl und/oder ein durch den zweiten Lichtstrahl erzeugter Schatten auf einen zweiten Sensorabschnitt dieses optischen Sensors. Optional können jedem der wenigstens zwei Lichtstrahlen jeweils ein optischer Sensor zugeordnet sein, sodass der erste Lichtstrahl bzw. ein durch diesen erzeugter Schatten ausschließlich auf einen ersten optischen Sensor und ein zweiter Lichtstrahl bzw. ein durch diesen erzeugter Schatten ausschließlich auf den zweiten optischen Sensor auftrifft.

In einer bevorzugten Ausführungsform kann es vorgesehen sein, dass sich der erste und wenigstens der zweite Lichtstrahl (a) vor und/oder (b) während und/oder (c) nach der jeweiligen Belichtung des Objekts kreuzen. Beispielsweise kreuzen sich die wenigstens zwei Lichtstrahlen während der jeweiligen Belichtung des Objekts. Bevorzugt kreuzen sich die wenigstens zwei Lichtstrahlen während der jeweiligen Belichtung des Objekts und zusätzlich vor und/oder nach der Belichtung des Objekts. Durch eine während der Objektbelichtung erfolgendes sich Kreuzen der wenigstens zwei Lichtstrahlen wird auf vorteilhafter Weise eine Geschwindigkeitsbestimmung und/oder kontinuierliche Vermessung des Tropfens ermöglicht. Beispielsweise schließen die sich kreuzenden Lichtstrahlen bzw. Mittellängslinien der wenigstens zwei Lichtstrahlen einen Winkel von 30° bis 150°, bevorzugt einen Winkel von 45° bis 135°, besonders bevorzugt einen Winkel von 60° bis 120°, weiter bevorzugt von 75° bis 105°, höchst bevorzugt von 85° bis 95°, ein. Beispielsweise beträgt der Innenwinkel zweier sich kreuzender Lichtstrahlen 90°. Durch eine wenigstens zwei das Objekt belichtende, insbesondere sich während der Objektbelichtung am Objekt sich kreuzende Lichtstrahlen bergen den Vorteil, dass eine Geschwindigkeitsbestimmung und/oder eine kontinuierliche Vermessung des, insbesondere als Tropfens vorliegenden, Objekts ermöglicht wird.

Es kann sich als vorteilhaft erweisen, wenn ein Erzeugen einer Auswerteinformation erfolgt, die ausgehend von einer von dem wenigstens einen als ereignisbasierter Bildsensor ausgebildeten optischen Sensor erzeugten Sensorinformation, unter Berücksichtigung eines Unterschieds in der Wellenlänge und/oder in den Wellenlängenbereichen des ersten und des wenigstens einen zweiten Lichtstrahls, zumindest eine dem ersten und/oder dem wenigstens einen zweiten Lichtstrahl zugeordnete Objektabbildinformation beschreibt. Alternativ oder zusätzlich kann eine zeitlich gesteuertes Ausbringen der wenigstens zwei Lichtstrahlen erfolgen, wobei in wenigstens einem ersten Zeitraum ausschließlich ein erster Lichtstrahl und in wenigstens einem zweiten, von dem ersten Zeitraum unterschiedlichen Zeitraum ausschließlich ein zweiter Lichtstrahl ausgesendet wird und/oder auf dem wenigstens einen optischen Sensor auftrifft. Es ist möglich, dass wenigstens in einem dritten Zeitraum der erste und der zweite Lichtstrahl auf dem wenigstens einen Sensor auftreffen. Durch die Verwendung eines ereignisbasierten Bildsensors wird es ermöglicht, während der Bewegung des Objekts, insbesondere während der Bewegung eines Flüssigkeitstropfens oder eines Festkörpers, z. B. eines Fräswerkzeugs, wenigstens zwei, bevorzugt wenigstens drei, besonders bevorzugt wenigstens vier, besonders bevorzugt wenigstens fünf, Bildinformationen zu unterschiedlichen Zeitpunkten zu erzeugen. So ist es möglich, während der Bewegung des Objekts in wenigstens drei Zeiträumen Aufnahmen bzw. Sensorinformation zu dem Objekt zu erzeugen. So kann in einem ersten Zeitraum ausschließlich ein erster Lichtstrahl bzw. ein durch diesen verursachter Schattenabschnitt des Objekts auf den Sensor auftreffen und in einem zweiten Zeitraum ausschließlich ein zweiter Lichtstrahl bzw. ein durch diesen verursachter Schattenabschnitt des Objekts auf den wenigstens einen Sensor auftreffen.

Beispielsweise kann zusätzlich wenigstens ein dritter Zeitraum vorliegen, in welchem sowohl der der erste als auch der zweite Lichtstrahl bzw. von den jeweiligen Lichtstrahlen erzeugte Schattenabschnitte des Objekts auf den wenigstens einen Sensor auftreffen bzw. abgebildet sind. Mit anderen Worten ermöglicht es der ereignisbasierte Sensor innerhalb eines kurzen Zeitraums zu einer Vielzahl von diskreten Zeitpunkten, Informationen zu erfassen, sodass bei sich schnell bewegenden Objekten und/oder bei Objekten, die einen geringen Bewegungsweg aufweisen zu mehreren Zeitpunkten während der Bewegung eine die Form bzw. die Kontur des Objekts zumindest teilweise beschreibende Information erfasst werden kann. Insbesondere kann die Form- bzw. die Geometrie und/oder das Volumen des sich bewegenden Objekts zumindest abschnittsweise, bevorzugt überwiegend, besonders bevorzugt vollständig, durch die erfassten Informationen abgeleitet werden.

In einer beispielhaften Ausführungsform des Verfahrens wird ein Volumenstrom des sich bewegenden Objekts, insbesondere einer sich bewegenden Flüssigkeit und/oder eines sich bewegenden Flüssigkeitstropfens, zumindest durch eine Sensorinformation des optischen Sensors ermittelt bzw. abgeleitet wird. Mit anderen Worten kann in Abhängigkeit der ermittelten Sensorinformation auf den Volumenstrom der sich bewegenden Flüssigkeit zurückgeschlossen werden. Hierbei kann der ermittelte Volumenstrom ein angenäherter Volumenstromwert eines tatsächlichen Volumenstroms sein. Das sich bewegende Objekt kann beispielsweise eine Flüssigkeit sein, die sich durch bzw. entlang eines vordefinierten Abschnitts bewegt, wobei vermittels des Verfahrens der Volumenstrom dieser Flüssigkeit zu dem vordefinierten Abschnitt erfasst wird. Der vordefinierte Abschnitt kann ein Durchtrittsbereich sein.

Der Volumenstrom kann des sich bewegenden Objekts kann beispielsweise unter Verwendung der nachfolgenden Formel ermittelt werden:

$$\dot{V}(z,\ t) = v(z,\ t) \cdot \left(\frac{b(z,t)}{2}\right)^2 \cdot \pi,$$

wobei

$\dot{V}(z,\ t)$ den Volumenstrom zu einem Zeitpunkt t in z-Richtung an einer abgebildeten Position z charakterisiert,
$v(z,\ t)$ die Geschwindigkeit eines Teils des Objekts oder des Objekts, insbesondere eines Tropfens, zu dem Zeitpunkt t in z-Richtung und an einer abgebildeten Position z abbildet und $b(z,\ t)$ die Breite des Tropfens zu dem Zeitpunkt t an einer abgebildeten Position z beschreibt.

Die Geschwindigkeit des Objekts, insbesondere des tropfenförmigen, flüssigen Objekts, kann beispielsweise die Bewegung des Objekts in seine Hauptbewegungsrichtung, z. B. in z-Richtung, beschreiben. Alternativ oder zusätzlich kann die Breite des Tropfens zum Zeitpunkt t die maximale Breite des Tropfens beschreiben. Unter Verwendung der angegeben Form meint, dass der Volumenstrom zumindest als Teilaspekt durch die angegebene Formel ermittelt wird, d. h. es wird explizit nicht ausgeschlossen, dass auch weitere Algorithmen, insbesondere Faktoren und/oder Variablen und/oder Messgrößen und/oder Prozessparameter zu der angegebenen Formel hinzugezogen bzw. mathematisch verknüpft werden können, um den Volumenstrom des Objekts, insbesondere einer Flüssigkeit, zu ermitteln.

Alternativ oder zusätzlich kann der Volumenstrom des sich bewegenden Objekts kann optional unter Verwendung der nachfolgenden Formel ermittelt wird:

$$\dot{V}(z,\, t) = v(z,\, t) \cdot b_1(z,\, t) \cdot b_2(z,\, t) \cdot \frac{\pi}{4},$$

wobei

$\dot{V}(z,\, t)$ den Volumenstrom zu einem Zeitpunkt t in z-Richtung an einer abgebildeten Position z charakterisiert,

$v(z,\, t)$ die Geschwindigkeit eines Teils des Objekts oder des Objekts, insbesondere eines Tropfens, zum Zeitpunkt t in z-Richtung an einer abgebildeten Position z abgebildet und

$b_1(z,\, t)$ die Breite des Tropfens zum Zeitpunkt t bezogen auf den ersten Lichtstrahl und

$b_2(z,\, t)$ die Breite des Tropfens zum Zeitpunkt t bezogen auf den wenigstens einen zweiten Lichtstrahl angibt.

Die Breite b kann beispielsweise eine Länge aufweisen, die in einer Ebene senkrecht zur z-Richtung, d. h. z. B. der Hauptbewegungsrichtung des Objekts, ausgerichtet ist. Es ist möglich, dass $\dot{V}(z, t)$ den Volumenstrom definiert, der sich aus $v(z, t)$, der Geschwindigkeit des Tropfens entlang seiner Hauptbewegungsrichtung (z-Richtung) sowie aus $b(z, t)$, die Breite des Tropfens im Beleuchtungszustand eines Lichtstrahls bzw. einer Lichtrichtung (Single View) ergibt. Respektive symbolisieren $b_1(z, t)$ und $b_2(z, t)$ die Breite des Objekts in einer aus zwei Richtungen erfolgenden Belichtung des Objekts (X-View). Hierbei können beispielsweise in einem ersten und einem weiteren Bildbereich eines optischen Sensors die jeweiligen Lichtstrahlen und/oder von den jeweiligen Lichtstrahlen hervorgerufene Schatteneffekte des Objekts abgebildet werden. Die Variablen t und z deuten dabei die zeitliche und räumliche Abhängigkeit der Variablen an. Mit der angegebenen Formel zur Bestimmung des Volumenstroms des Objekts wird es ermöglicht, dass über eine Integration und Division durch die örtliche Ausdehnung und anschließende Integration über die Zeit t, als Ergebnis Werte ermittelt werden können, die gute Durchschnittswerte ausgeben und optional auch für weitere, evtl. präzisere Berechnungsoptionen offenstehen. Beispielsweise kann mit den Werten eine blockweise Berechnung und/oder eine ein echtes vektorielles Bewegungsmodell ermöglicht werden. Mit anderen Worten ausgedrückt, kann durch die Bestimmung des Volumenstroms in Abhängigkeit von z und t wird die Bewegung einzelner Tropfenteile (abhängig von der z-Position) beschrieben. Eine räumliche Integration über diese Teilvolumenströme und eine anschließende Division durch die erfasste Ausdehnung in z-Richtung ermöglicht die Ermittlung eines Durchschnittsvolumenstroms der Gesamtmasse in z-Richtung. Diese kann optional wiederum durch zeitliche Integration in ein Volumen umgerechnet werden.

Beispielsweise kann zu einem ersten Zeitpunkt eine erste Sensorinformation des Objekts und zu wenigstens einem zweiten Zeitpunkt wenigstens eine zweite Sensorinformation des Objekts durch den wenigstens einen optischen Sensor erzeugt werden, wobei ein Zusammenführen der ersten und der wenigstens einen zweiten Sensorinformation zur Bildung einer Objektinformation erfolgt. Hierbei kann die Objektinformation eine, z. B. eine Länge des Objekts in Richtung seiner Bewegungsrichtung beschreibende Längeninformation umfassen. Beispielsweise kann die aus wenigstens einer ersten und einer zweiten Sensorinformation zusammengeführte Objektinformation eine Längeninformation umfassen, welche eine Länge angibt, die länger ist als die tatsächliche Länge des Objekts, z. B. eines Tropfens. Hierbei kann die Länge der Längeninformation des Objekts, für den Fall, dass das Objekt sich während seiner Bewegung und/oder am Ende seiner Bewegung verformt (z. B. eines auf eine Oberfläche auftreffenden Tropfes) nie gänzlich in der Realität vorliegen. D. h. es kann eine Länge für eine Längeninformation erfasst werden, die eine Hilfsgröße zur Ermittlung bzw. zur Beschreibung eines Volumenstroms und/oder eines Massenstroms und/oder eines Volumens und/oder einer anderen physikalischen und/oder chemischen Eigenschaft des Objekts herangezogen wird. Im Falle eines Tropfens, der auf eine Oberfläche trifft und der so lang wäre, dass er zumindest im Erfassungsbereich, nie gänzlich als diskreter Tropfen (Anfang und Ende des Tropfens in Bewegungsrichtung wäre zu keinem Zeitpunkt gleichzeitig auf der Sensoroberfläche abgebildet) ausgebildet wäre, könnte dieser damit eine tatsächliche Länge aufweisen, die dieser nie gänzlich ausgebildet, da er vorher bereits auf eine Platte auftrifft. Mit anderen Worten gibt eine derartige Längeninformation eine Länge an, die sich zwar theoretisch ausbilden würde, aber tatsächlich nie vorläge, wobei diese Längeninformation als Hilfsgröße für eine Berechnung einer Eigenschaft, insbesondere des Volumens, des Tropfens eingesetzt werden kann.

Es ist möglich, dass ein Erfassen des, insbesondere sich bewegenden, Objekts durch ein zeitgesteuertes Erfassungsmittel zum Erzeugen einer Bildinformation des Objekts erfolgt, wobei die Bildinformation mit zumindest einer Sensorinformation des ereignisbasierten Bildsensors zu einer das Objekt beschreibenden Objektinformation zusammengeführt wird. Das Erfassungsmittel kann beispielsweise eine herkömmliche bzw. konventionelle Kamera sein, z. B. eine mit einem CCD-Sensor ausgestattete Kamera. Vermittels dem Erfassungsmittel kann eine zeitgesteuerte, d. h. durch einen von außen vorgegebenen Zeitpunkt ermittelte Bildinformation in Form eines Einzelbildes zumindest eines Teils des Objekts, erzeugt werden. Es ist damit möglich, aus einem einer Bildinformation eines Erfassungsmittels (konventionelle Kamera) und aus einer Sensorinformation eines ereignisbasierten Bildsensor eine zusammengesetzte und/oder zusammengeführte und das Objekt beschreibende Information des Objekts zu erzeugen. Beispielsweise kann eine typische Bildinformation, welche mit einem CCD-Sensor erfasst wurde mit einer Sensorinformation aus einem Erfassungsereignis des ereignisbasierten Bildsensors überlagert oder in sonstiger Weise zusammengeführt sein.

Während des sensorgestützten Erfassens kann sich beispielsweise wenigstens ein erstes Objekt in eine erste Richtung und wenigstens ein zweites Objekt in eine zweite, von der ersten Richtung abweichende Richtung bewegen und die aus dem ereignisbasierten Bildsensor erfasste Sensorinformation eine erste, dem ersten Objekt zugeordnete Teilsensorinformation und eine zweite, dem zweiten Objekt zugeordnete Teilsensorinformation beschreiben. Die Bewegung des ersten und des zweiten Objekts sind jeweils Bewegungen relativ zu einem ortsfesten Punkt. Durch eine Analyse der Veränderungen von durch die aus dem wenigstens einen ereignisbasierten Bildsensor erfassten Sensorinformation kann die Veränderung im Verlauf in zumindest eine erste Objektbewegung in eine erste Richtung in zumindest eine weitere Objektbewegung in eine zweite Richtung erfasst werden. Dabei kann durch einen Rückschluss der wenigstens zwei Gruppen von Musteränderungen, welche in zwei unterschiedliche Richtungen, insbesondere unter ähnlichen Geschwindigkeiten, erfolgen, ein erstes und ein weiteres Objekt aus der Sensorinformation erfasst bzw. extrahiert werden. So kann ein in eine erste Richtung sich bewegendes Objekt und ggf. ein sich in eine zweite Richtung bewegender Hintergrund (Zweitobjekt) aus der Sensorinformation abgeleitet werden. Zum Beispiel kann die das erste Objekt betreffende Information aufgrund wenigstens eines Lichtstrahls, welcher im Durchlichtverfahren auf das erste Objekt gerichtet ist und auf den optischen Sensor trifft, und die das wenigstens eine zweite Objekt betreffende Information aufgrund wenigstens eines Lichtstrahls, welcher nach einer Reflexion auf der Oberfläche des zweiten Objekts auf den optischen Sensor abgelenkt wird bzw. dort auftrifft, erzeugt werden.

Beispielsweise ist das erste Objekt ein sich vor einem Hintergrund bewegendes Objekt, wobei das zweite Objekt (Zweitobjekt) ein dem Hintergrund zuzuordnender Bestandteil ist. Bevorzugt ist das zweite Objekt ein Trägerkörper, auf welchen das erste Objekt aufgebracht wird bzw. aufzubringen ist. Das erfasste bewegte erste Objekt kann beispielsweise während zumindest einer ersten Erfassungsphase oder in sämtlichen Phasen der Erfassung von dem zweiten Objekt beabstandet sein. Das erste Objekt kann beispielsweise ein Fräswerkzeug und das zweite Objekt ein von dem Fräswerkzeug zu bearbeitendes Werkstück sein. Das Werkstück kann dabei zu einem weiteren Ort ortsfest sein oder sich relativ zu einem weiteren Ort bewegen. Auch kann das erste Objekt z. B. ein Bonddraht sein, der an, insbesondere auf, einen Trägerkörper herangeführt bzw. aufgesetzt wird, wobei das zweite Objekt der Trägerkörper, z. B. eine Leiterplatte oder ein elektronisches Bauteil, sein kann. Der Trägerkörper kann beispielsweise eine Bewegung ausführen, z. B. eine Zuführbewegung oder Abführbewegung zu bzw. von einem Ort, an welchem der Bonddraht auf dem Trägerkörper aufgebracht wird.

Beispielsweise wird in einer ersten Phase eine Geschwindigkeit der Bewegung des wenigstens einen Objekts und zumindest einer Maßgröße des wenigstens einen Objekts, z. B. dessen Erstreckung senkrecht zur Bewegungsrichtung, und in zumindest einer zweiten Phase eine Geschwindigkeit und eine Maßgröße des wenigstens einen Objekts, insbesondere durch zumindest den ereignisbasierten Bildsensor, erfasst und diese Sensorinformationen zum Abschätzen wenigstens eines Volumenbestandteils, bevorzugt des Gesamtvolumens, des wenigstens einen Objekts verwendet. So kann durch einen Vergleich von Sensorinformationen eines ersten und eines zweiten Zeitpunkts innerhalb der ersten Phase eine Geschwindigkeit des wenigstens einen Objekts ermittelt werden. Auch kann zu zumindest einem Zeitpunkt innerhalb der ersten Phase und/oder durch eine Mittelwertbildung wenigstens zweier Zeitpunkte der ersten Phase eine Maßgröße, z. B. eine Länge und/oder eine Breite und/oder eine definiert im Raum ausgerichtete Erstreckung, des wenigstens einen Objekts ermittelt werden. Diese Sensorinformationen können sodann dazu eingesetzt werden, zumindest einen Volumenbestandteil des Objekts, insbesondere ein Gesamtvolumen des Objekts, abzuschätzen und/oder zu bestimmen. Das abgeschätzte Volumen kann auch ein fiktives Volumen darstellen, welches ein z. B. als Tropfen einer Flüssigkeit ausgebildetes Objekt real nie aufweist. So kann z. B. ein durch einen Erfassungsbereich tretender Tropfen bereits auf einem Auftreffort auftreffen und damit eine während seines freien Falls geänderte Form aufweisen. Dadurch, dass jedoch das Objekt bzw. der Flüssigkeitstropfen zu wenigstens zwei Zeitpunkten während seiner freien Falls erfasst wird, kann auf dessen Volumen zurückgeschlossen werden, sodass beispielsweise eine Information darüber gewonnen werden kann, welche Masse und/oder welches Volumen die Ausbringung einer Flüssigkeit aufgewiesen hat.

Beispielsweise wird vermittels eines Algorithmus eine Mustererkennung ausgeführt, um einen Objektbereich zu definieren bzw. zu erkennen und damit eine Begrenzung innerhalb eines durch den optischen Sensor erfassten Bildes zu erreichen, um eine Maßgröße bzw. eine Maßinformation (z. B. Geschwindigkeit, Länge, Breite und/oder Volumen) des Objekts zu bestimmen. So können beispielsweise in einem zumindest durch den ereignisbasierten Bildsensor erzeugten ersten und zweiten Bildes bzw. zu mindestens zwei Zeitpunkten ein Objektbereich definiert bzw. eine Geschwindigkeitsermittlung ausgeführt bzw. eine Wegstrecke eines Objektabschnitts ermittelt werden.

Es ist möglich, dass zu wenigstens zwei Zeitpunkten eine Geschwindigkeiten und/oder eine Abmessungen und/oder eine zurückgelegte Wegstrecke eines Objekts bzw. eines Abschnitts des Objekts, insbesondere eines Tropfens, vermittels zumindest des ereignisbasierten Bildsensors ermittelt wird bzw. werden und aus dieser bzw. diesen Sensorinformation(en) eine eine Veränderung der Werte beschreibende Veränderungsinformation ermittelt wird. Die Veränderungsinformation kann beispielsweise den Umfang und/oder die Art einer Veränderung der Form und/oder des Volumens und/oder der Masse und/oder der Geschwindigkeit und/oder der Wegstrecke des Objekts beschreiben. Optional kann die Veränderungsinformation eingesetzt werden, um eine Betriebsinformation über einen das wenigstens eine erfasste Objekt in Bewegung versetzt habenden Antriebsprozess, insbesondere einen das Objekt applizierenden Applikationsprozess, abzuleiten. Die Betriebsinformation kann Betriebsparameter und/oder einen Betriebszustand einer das Objekt manipulierenden bzw. mit dem Objekt interagierenden Vorrichtung betreffen, insbesondere einer Vorrichtung, welche das Objekt in Bewegung versetzt und/oder bewegt. Im Falle eins Fräswerkzeugs, kann die Veränderungsinformation eine Information über den Betriebszustand der das Fräswerkzeug tragenden bzw. in Bewegung versetzenden Fräsanlage beschreiben. Allgemein kann die Veränderungsinformation dazu eingesetzt werden, eine Stabilität eines Antriebs- und/oder Applikationsprozesses zu erfassen oder Informationen zur Stabilitätsbeurteilung der jeweiligen Prozesse zu ermöglichen. So kann beispielsweise die Stabilität des Dosierprozesses vermittels der Veränderungsinformation abgebildet und/oder geschätzt werden. Wird z. B. das Gesamtvolumen des Tropfens mit größerem Abstand vorab bestimmt, kann man anhand der Stabilität der Prozessparameter das Gesamtvolumen des Tropfens abschätzen, auch wenn der Tropfen bei kleinerem Dosierabstand nicht als Einzeltropfen erfassbar ist.

Neben dem Verfahren betrifft die Erfindung eine Vorrichtung zum Erfassen wenigstens eines Objekts umfassend (a) zumindest eine Leuchteinrichtung zum Aussenden wenigstens eines Lichtstrahls, der das, insbesondere sich bewegende, zu erfassende Objekt belichtet, (b) wenigstens einen optischen Sensor zum Erfassen, insbesondere eines Konturabschnitts, des wenigstens einen Objekts durch ein Auftreffen des wenigstens einen Lichtstrahls und/oder durch ein Abbilden eines durch eine Belichtung des wenigstens einen Objekts mit dem wenigstens einen Lichtstrahl erzeugten Schattenabschnitts auf dem wenigstens einen optischen Sensor, wobei eine Relativbewegung zwischen dem wenigstens einen Objekt und dem optischen Sensor während des Erfassens ausführbar ist, wobei der wenigstens eine optischen Sensor ein ereignisbasierter Bildsensor ist.

Sämtliche Vorteile, Einzelheiten, Ausführungen und/oder Merkmale des erfindungsgemäßen Verfahrens sind auf die erfindungsgemäßen Vorrichtung übertragbar bzw. anzuwenden und umgekehrt.

Die Erfindung ist anhand von Ausführungsbeispielen in den Zeichnungen näher erläutert. Dabei zeigt:

Fig. 1 eine Prinzipdarstellung einer Vorrichtung zum Erfassen wenigstens eines Objekts gemäß einem Ausführungsbeispiel;

Fig. 2 eine Prinzipdarstellung einer Vorrichtung mit im Erfassungsbereich des Objekts sich kreuzenden Lichtstrahlen gemäß einem Ausführungsbeispiel;

Fig. 3 eine schematische Darstellung einer Auswertung mehrerer zu unterschiedlichen Zeitpunkten erfassten Sensorinformationen eines ereignisbasierten Bildsensors gemäß einem Ausführungsbeispiel;

Fig. 4 eine schematische Darstellung einer Objektinformation, die aus mehreren zu unterschiedlichen Zeitpunkten erfassten Sensorinformationen zusammengesetzt ist gemäß einem Ausführungsbeispiel;

Fig. 5 eine schematische Darstellung einer Situation zur Erfassung eines Objekts und eines hinter dem Objekt liegenden Hintergrunds;

Fig. 6 eine schematische Darstellung einer Sensorinformation eines ereignisbasierten Bildsensors zu der Situation gemäß Figur 6;

Fig. 7 eine schematische Darstellung einer Sensorinformation eines ereignisbasierten Bildsensors auf Pixelebene gemäß einem Ausführungsbeispiel;

Fig. 8 eine schematische Darstellung eines zu erfassenden Tropfens sowie eines sich während der Applikation ergebenden Satellit-Tropfens.

Fig. 9 eine schematische Darstellung eines als Fräswerkzeug ausgebildeten zu erfassenden Objekts;

Fig. 10 eine schematische Darstellung eines Verfahrensablaufs eines Verfahrens zum Erfassen wenigstens eines Objekts unter Verwendung wenigstens eines ereignisbasierten Bildsensors sowie zumindest einen konventionellen Erfassungsmittels gemäß einem Ausführungsbeispiel.

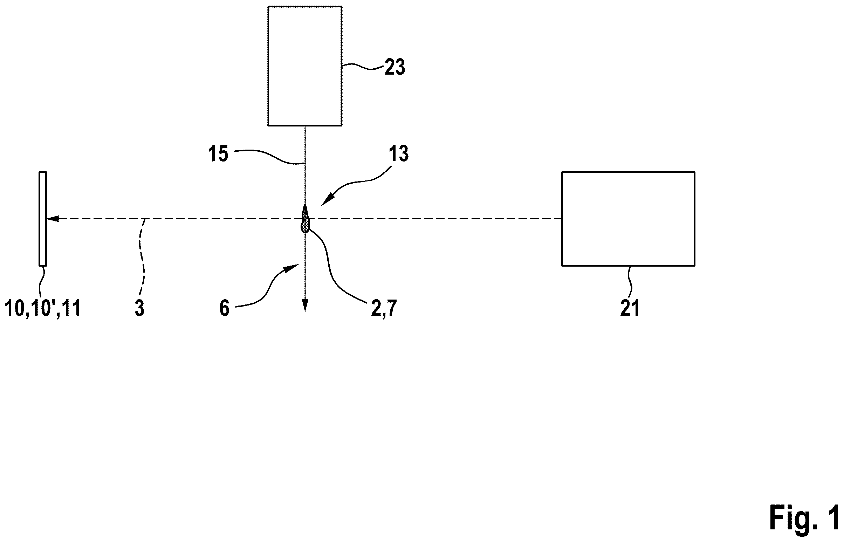

In den nachfolgenden Figuren wird das Verfahren zum Erfassen wenigstens eines Objekts 2 beispielhaft anhand unterschiedlicher Ausführungsbeispiele erläutert. Zunächst erfolgt ein Aussenden wenigstens eines Lichtstrahls 3, 4, der das wenigstens eine zu erfassende Objekt 2 belichtet. Beispielsweise wird der Lichtstrahl 3, 4 von zumindest einer Leichteinrichtung 21, 22 ausgesendet. Sodann erfolgt ein Erfassen, insbesondere eines Konturabschnitts, des wenigstens einen Objekts 2 durch ein Auftreffen des wenigstens einen Lichtstrahls 3, 4 und/oder durch ein Abbilden eines durch eine Belichtung des wenigstens einen Objekts 2 mit dem Lichtstrahl 3, 4 erzeugten Schattenabschnitts 5 auf wenigstens einen optischen Sensor 10, 10'. Es erfolgt ferner ein Ausführen einer Relativbewegung 6 zwischen dem wenigstens einen Objekt 2 und dem optischen Sensor 10, 10' während des Erfassens. Der wenigstens eine hierbei verwendete optischen Sensor 10, 10' ist ein ereignisbasierter Bildsensor 11 bzw. wird ein solcher hierfür verwendet. In der in Figur 1 gezeigten Ausführungsform verläuft die Ausbreitungsrichtung des wenigstens einen Lichtstrahls 3, 4 senkrecht zur Bewegungsrichtung 15 des durch einen Erfassungsbereich 13 hindurchtretenden Objekts 2, das im diesem Fall ein Tropfen 7 ist, der aus einer Applikationseinrichtung 23 austritt bzw. appliziert wird. Es ist optional möglich, dass die Bewegungsrichtung 15 einen Winkel ungleich 90°, bevorzugt einen Winkel zwischen 5° und 85°, besonders bevorzugt zwischen 10° und 80°, weiter bevorzugt zwischen 20° und 60°, einschließt. Das wenigstens eine Objekt 2 wird hierbei beispielsweise im Durchlichtverfahren von dem wenigstens einen Lichtstrahl 3, 4 angestrahlt und zumindest abschnittsweise am optischen Sensor 10, 10' bzw. dem ereignisbasierten Bildsensor 11 erfasst. Als zu erfassendes Objekt 2 kann beispielsweise ein von einer Flüssigkeit gebildeter Tropfen 7 verwendet werden bzw. vorliegen.

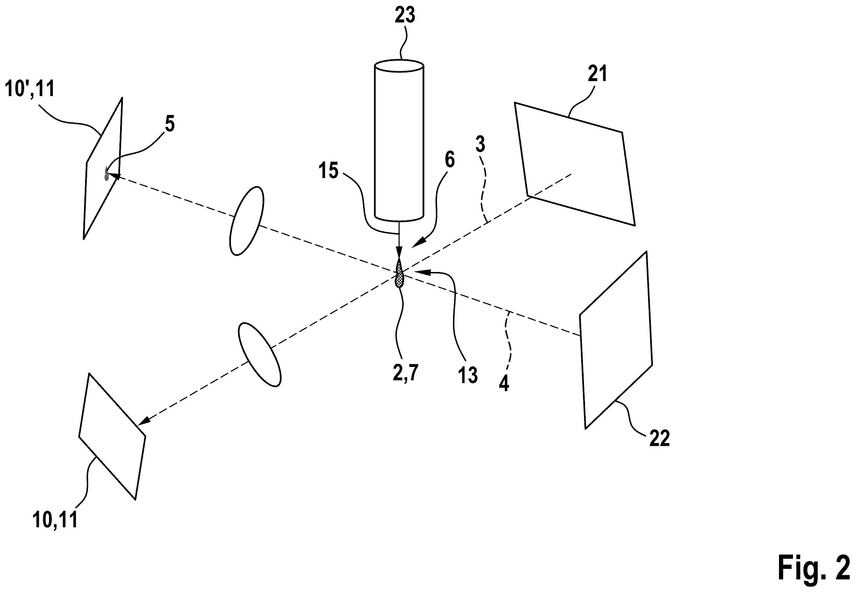

In der in Figur 2 gezeigten Ausführungsform ist es vorgesehen, dass zwei unterschiedliche Ausbreitungsrichtungen aufweisende Lichtstrahlen 3, 4 den Erfassungsbereich 13 durchdringen und das zu erfassende Objekt 2 aus unterschiedlichen Richtungen belichtet bzw. einen durch das belichtete Objekt 2 gebildeten Schatten auf den wenigstens einen optischen Sensor 10, 10' bzw. wie beispielhaft dargestellt, auf zwei separate optische Sensoren 10, 10' abbildet. Vorzugsweise sind zumindest der erste, dem ersten Lichtstrahl 3 zugeordnete optischen Sensor 10 und der zweite, dem zweiten Lichtstrahl 4 zugeordnete optischen Sensor 10' jeweils als ereignisbasierter Bildsensor 11 ausgebildet. In Lichtausbreitungsrichtung betrachtet nach dem Erfassungsbereich 13 und vor dem optischen Sensor 10, 10' kann beispielsweise ein optisches Element, z. B. ein Objektiv, insbesondere eine Sammellinse, angeordnet sein.

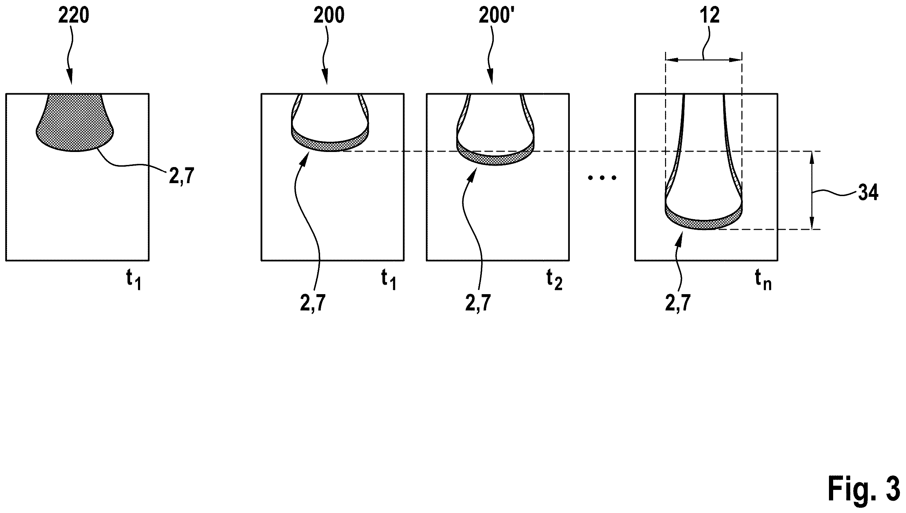

In Figur 3 ist anhand eines in Form eines Tropfens 7 vorliegenden zu erfassenden Objekts 2 in der Abbildung ganz links eine Bildinformation bzw. ein Bildausschnitt eines konventionellen Bildsensors (z. B. CCD-Sensor) gezeigt. Aufgrund der Trägheit des konventionellen Sensors erfasst dieser nur zum Zeitpunkt $t_1$ ein Bild. Im Vergleich dazu erfasst der ereignisbasierte Bildsensor 11 zu einer Vielzahl an Zeitpunkten $t_1$, $t_2$, $t_n$ Sensorinformationen 200, 200', vgl. die drei weiteren Abbildungen aus Figur 3. Die in den drei linken Abbildungen der Figur 3 dargestellten symbolisch grauen Abschnitte stellen Bildbereich der Sensorinformationen 200, 200' dar, die aufgrund des im zeitlichen Verlauf auf die Sensoroberfläche auftreffenden Lichtstrahls 3, 4 heller werden. Die in diesen Abbildungen symbolisch schwarz dargestellten Abschnitte stellen Bildbereiche dar, die aufgrund einer Abschattung durch Auftreffen des Lichtstrahls 3, 4 auf das Objekt 2 (z. B. im Durchlichtverfahren) dunkler werden. Die in diesen Abbildungen symbolisch weiß dargestellten Abschnitte haben im Vergleich zu einem vorherigen Betrachtungszeitpunkt keine Helligkeitsänderung erfahren. Es ist in der Zusammenschau der drei linken Abbildungen aus Figur 3 ersichtlich, dass aufgrund der Funktionsweise des ereignisbasierten Bildsensors 11 eine Konturform des Tropfens 7 zuverlässig und in kurzen Zeitabständen erfassbar ist. So wird es ermöglicht, die maximale Breite 12 des Objekts 2 zu ermitteln. Ferner wird es ermöglicht, durch einen Vergleich von zu definierten Zeitpunkten erfassten Punktabschnitten des sich relativ zum ereignisbasierten Bildsensor 11 bewegenden Objekts 2 eine Wegstrecke 34 bzw. Wegdifferenz zu ermitteln. Aus dieser in einem bekannten Zeitraum zurückgelegten Wegstrecke 34 kann eine Geschwindigkeit des Objekts 2 ermittelt werden.

Es kann sich als vorteilhaft erweisen, dass aufgrund dessen, dass der ereignisbasierte Sensor 11 quasi kontinuierlich das Geschehen erfasst, zu nahezu beliebige Zeitpunkte für z. B. eine Geschwindigkeitsmessung herangezogen werden können.

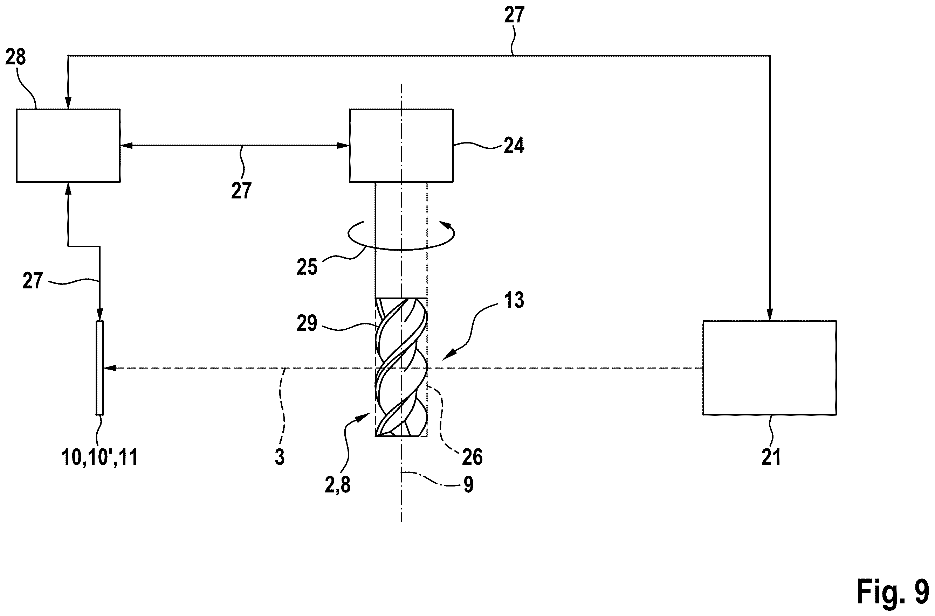

Es ist möglich, dass als zu erfassendes Objekt 2 beispielsweise ein Festkörper 8 verwendet wird bzw. vorliegt. Beispielsweise führt der Festkörper 8 eine um eine Drehachse 9 drehende Bewegung 25 aus. Die Drehachse 9 der Drehbewegung kann vorzugsweise, wie in Figur 9 dargestellt, innerhalb des Volumens des Objekts 2 angeordnet sein. Bevorzugt ist die Drehachse 9 koaxial zu einer Haupterstreckungsachse und/oder zu einer Symmetrieachse des zu erfassenden Objekts 2 angeordnet. Beispielsweise kann der Festkörper 8 bzw. das zu erfassende Objekt 2 ein spanabhebendes Werkzeug, z. B. ein Fräswerkzeug oder ein Bohrwerkzeug sein. Dabei können beispielsweise durch die Bewegung des Werkzeugs dessen Schneiden in einer Betrachtung in der Seitenansicht eine Bewegung ausführen. Zumindest diese Bewegung bzw. diese Lageveränderung der Schneiden 29 des Werkzeugs bzw. des Objekts 2 kann durch den wenigstens einen Lichtstrahl 3, 4 und dessen Auftreffen bzw. durch eine Schattenbildung auf dem optischen Sensor 10, 10' erfasst werden. Dabei kann sich das Werkzeug bzw. dessen Bereiche sich innerhalb einer Hüllfläche bzw. eines Hüllvolumens 26 befinden, vgl. Figur 9. Das Objekt 2, insbesondere das spanabhebende Werkzeug kann beispielsweise durch eine Antriebseinrichtung 24 in Bewegung versetzt werden. Im Falle eines Fräswerkzeugs als Objekt 2, bildet eine Fräsmaschine, in welcher das Fräswerkzeug eingesetzt wird, eine entsprechende Antriebseinrichtung 24.

Es ist möglich, dass die Antriebseinrichtung 24 zum Antreiben zumindest eines zu erfassenden Objekts 2 und/oder eine Applikationseinrichtung 23 zum Applizieren wenigstens eines zu erfassenden Objekts 2 über eine uni- oder bidirektionale Datenverbindung 27 mit zumindest einer Leuchteinrichtung 21, 22 und/oder mit zumindest einer Rechnereinheit 28 und/oder mit zumindest einem optischen Sensor 10, 10' zum Datenaustausch mittelbar oder unmittelbar verbunden ist. Bevorzugt ist die Applikations- und/oder Antriebseinrichtung 23, 24 über eine Datenverbindung 27 mit zumindest einem ereignisbasierten Bildsensor 11 und mit zumindest einem, das Objekt 2 zusätzlich erfassenden und zeitgesteuerten, konventionellen Erfassungsmittel 16 zum Erzeugen einer Bildinformation 220 des Objekts 2 zum Datenaustausch verbunden (nicht dargestellt). Die wenigstens eine Datenverbindung 27 kann kabelgebunden oder kabellos Daten übertragen, so kann die wenigstens eine Datenverbindung 27 zum Beispiel als Funkverbindung, vorzugsweise als Kurzstrecken-Funkverbindung, insbesondere als Bluetooth-Funkverbindung, ausgebildet sein.

Das sich bewegende Objekt 2, insbesondere ein Tropfen 7, kann beispielsweise eine Breite 12 von maximal 10 mm, bevorzugt maximal 5 mm, besonders bevorzugt maximal 2,0 mm, weiter bevorzugt maximal 1,0 mm, höchst bevorzugt maximal 0,5 mm, aufweisen. Alternativ oder zusätzlich kann das zu erfassende Objekt 2 sich mit einer Geschwindigkeit $v_B$ im und/oder durch einen Erfassungsbereich 13 bewegen innerhalb dem das Objekt 2 von dem wenigstens einen Lichtstrahl 3, 4 belichtet wird, wobei die Geschwindigkeit $v_B$ zu einer maximalen Breite 12 des Objekts 2 ein Verhältnis von größer 1000 1/s, bevorzugt größer 2000 1/s, besonders bevorzugt größer 5000 1/s, höchst bevorzugt größer 10000 1/s, aufweist.

Ein erster und wenigstens ein zweiter Lichtstrahl 3, 4 können beispielsweise jeweils das Objekt 2 belichten, wobei (a) durch Auftreffen des ersten Lichtstrahls 3 und/oder durch Abbilden eines durch Belichtung des Objekts 2 mit dem ersten Lichtstrahl 3 erzeugten Schattenabschnitts 5 und (b) durch Auftreffen wenigstens des zweiten Lichtstrahls 4 und/oder durch Abbilden eines durch Belichtung des Objekts 2 mit dem wenigstens einen zweiten Lichtstrahl 4 erzeugten Schattenabschnitts 5 auf wenigstens einem optischen Sensor 10, 10' zumindest ein Abschnitt, insbesondere ein Konturabschnitt, des Objekts 2 erfasst wird. Beispielsweise kann sich der erste und wenigstens der zweite Lichtstrahl 3, 4 vor und/oder während und/oder nach der jeweiligen Belichtung des Objekts 2 kreuzen. Dieses Kreuzen kann vorzugsweise in einer gemeinsamen Ebene mit wenigstens einem, bevorzugt mit beiden, Lichtstrahl(en) 3, 4 erfolgen bzw. liegen. Beispielsweise kreuzen sich ein erster Lichtstrahl 3 und ein zweiter Lichtstrahl 4 in dem Erfassungsbereich 13, in welchem das zu erfassende Objekt 2 verortet ist und zusätzlich an einem in Lichtausbreitungsrichtung vor und/oder nach dem Kreuzungspunkt im Erfassungsbereich 13 liegenden Kreuzungspunkt(en). Diese wenigstens zwei Kreuzungspunkte können in einer gemeinsamen Ebene mit wenigstens einem, bevorzugt mit beiden, Lichtstrahl(en) 3, 4 liegen.

Es kann sich als vorteilhaft erweisen, wenn ein Erzeugen einer Objektabbildinformation erfolgt, die ausgehend bzw. in Abhängigkeit von einer von dem wenigstens einen optischen Sensor 10, 10' erzeugten Sensorinformation 200, unter Berücksichtigung eines Unterschieds in der Wellenlänge und/oder in den Wellenlängenbereichen des ersten und des wenigstens einen zweiten Lichtstrahls 3, 4, zumindest einen dem ersten und/oder dem wenigstens einen zweiten Lichtstrahl 3, 4 zugeordnete Sensorinformationsanteil beschreibt. Damit kann die Objektabbildinformation, die durch das Auftreffen und/oder den Schattenwurf des jeweiligen Lichtstrahls 3, 4 durch den optischen Sensor 10, 10' erfasste Sensorinformation 200 lichtstrahlspezifisch auflösen bzw. angeben. Folglich kann eine Belichtungsrichtung bzw. eine Betrachtungsebene des Objekts 2, in der Objektabbildinformation beschrieben werden. Hierzu kann eine Auswerteinformation vorgehalten werden, welche eine Zuordnung eines ersten Wellenlängenbereichs und/oder einer ersten Wellenlänge einem ersten Lichtstrahl 3 und eine Zuordnung eines zweiten Wellenlängenbereichs und/oder einer zweiten Wellenlänge zu einem zweiten Lichtstrahl 4 beschreibt. Damit kann vermittels der Auswerteinformation eine Auswertung der Sensorinformation 200 erfolgen, sodass eine Objektabbildinformation erzeugbar ist, die eine die Belichtungsrichtung auf das Objekt berücksichtigende Objektinformation ermöglicht.

Es ist möglich, dass ein Volumenstrom des sich bewegenden Objekts 2, insbesondere wenigstens einer sich bewegenden Flüssigkeit bzw. eines Tropfens 7, zumindest durch eine Sensorinformation 200, 200' des wenigstens einen optischen Sensors 10, 10' ermittelt wird. Damit kann beispielsweise eine durch den ereignisbasierten Bildsensor 11 erfasste Sensorinformation 200, 200' einen Inputgröße zur Ermittlung eines Volumenstroms des Objekts 2 darstellen bzw. einen Beitrag zur Ermittlung eines Volumenstroms des Objekts 2 leisten.

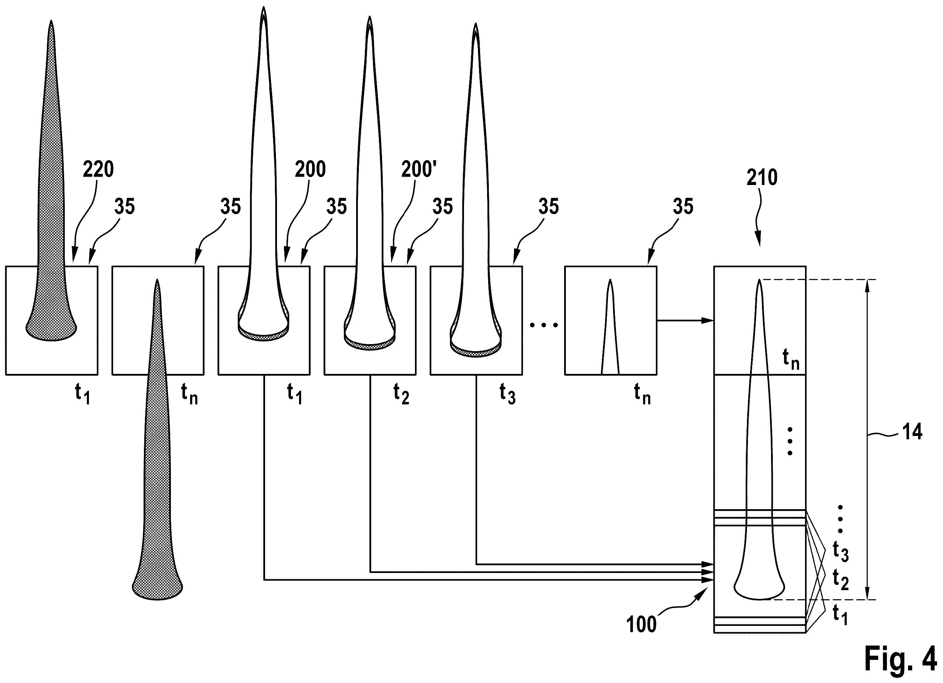

Beispielsweise kann zu einem ersten Zeitpunkt eine erste Sensorinformation 200 des Objekts 2 und zu wenigstens einem zweiten Zeitpunkt wenigstens eine zweite Sensorinformation 200' des Objekts 2 durch den optischen Sensor 10, 10' erzeugt werden, wobei ein Zusammenführen 100 der ersten und der wenigstens einen zweiten Sensorinformation 200, 200' zur Bildung einer Objektinformation 210 erfolgt. Die Objektinformation 210 umfasst dabei eine eine Länge 14 des Objekts 2 entlang seiner Bewegungsrichtung 15 beschreibende Längeninformation. Damit wird es erreicht, dass durch die Objektinformation 210 und das Zusammenführen 100 von Sensorergebnissen aus unterschiedlichen Erfassungszeitpunkten eine Länge 14 des Objekts 2 beschrieben wird, die nicht in einem einzigen Bildausschnitt eines optischen Sensor 10, 10' erfassbar ist (vgl. Figur 4), insbesondere die keine reale Länge des Objekts 2 bildet, sondern z. B. eine theoretische Länge des Objekts 2. Diese theoretische Länge 2 kann jedoch eine Aussagekraft aufweisen, die über jene einer nur einen Zeitpunkt beschreibenden Sensorinformation 200 hinausgeht. Beispielsweise kann vermittels der Objektinformation 210 ein Volumen des Objekts 2 anhand eines auf eine Geometrie des Objekts 2 abstellenden Algorithmus bestimmt werden, obwohl diese Geometrie in der Realität von dem Objekt 2 nicht oder nur kurzzeitig eingenommen wird. Damit kann eine Volumenbestimmung des Objekts 2 anhand einer Hilfsgröße bzw. eines geometrischen Zusammenhangs ermittelt werden, welche so beispielsweise nie real vorlag, vgl. Figur 4.

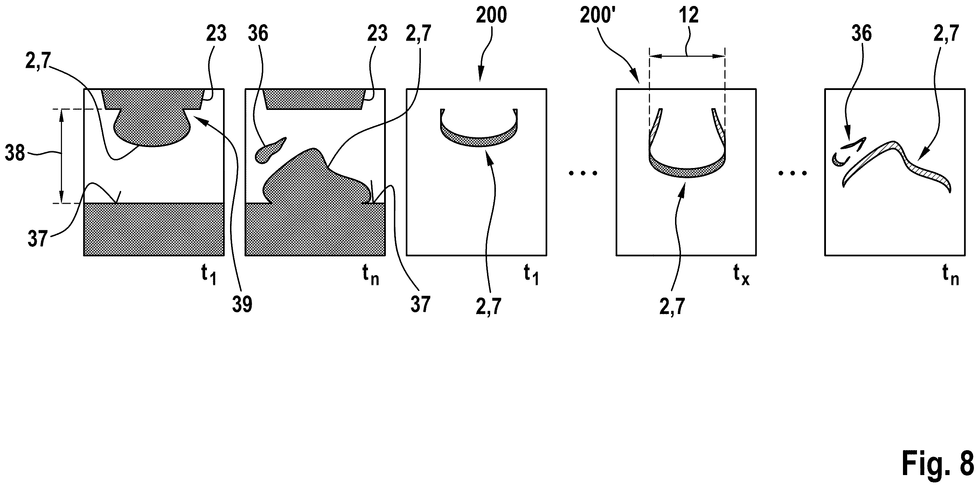

Wie beispielhaft in Figur 8 dargestellt, ist es durch die Verwendung eines ereignisbasierten Bildsensors 11 möglich, Längen- und/oder Forminformationen, insbesondere Volumeninformationen, zu einem zu erfassenden Objekt 2 zu erfassen, die im Falle eines konventionellen Erfassungsmittels nicht erfassbar wären. Die beiden linken Abbildungen in Figur 8 zeigen ein konventionelles Erfassungsmittel, wobei der aus der Applikationseinrichtung 23 ausgegebene Tropfen 7 nur in einem Ausgabezeitpunkt t1 und in einem bereits auf eine Auftrefffläche aufgetroffenen Zeitpunkt tn erfassbar ist. Demgegenüber ist vermittels dem ereignisbasierten Bildsensor 11 eine Vielzahl an Sensorinformationen 200, 200' erfassbar, die deutlich mehr Informationen über die tatsächliche Form des applizierten Tropfens 7 enthält, sodass eine genauere Maß- und/oder Geschwindigkeits- und/oder Volumeninformation zu dem Tropfen 7 erzeugbar ist. Es ist im Falle des ereignisbasierten Bildsensors 11 möglich, Satellitentropfen zu erfassen, insbesondere kann deren Volumen und/oder deren Geschwindigkeit ermittelt werden.

Der Einsatz eines ereignisbasierten Bildsensors 11 kann sich insbesondere bei Applikationseinrichtungen 23 als vorteilhaft erweisen, die nur einen geringen Abstand 38 (z. B. Dosierabstand) zu einer Auftrefffläche 37 des von der Applikationseinrichtung 23 applizierten Tropfen 7 aufweisen. Der Abstand 38 kann dabei als Abstand einer Austrittsöffnung 39 der Applikationseinrichtung 23 und der Auftrefffläche 37 definiert sein.

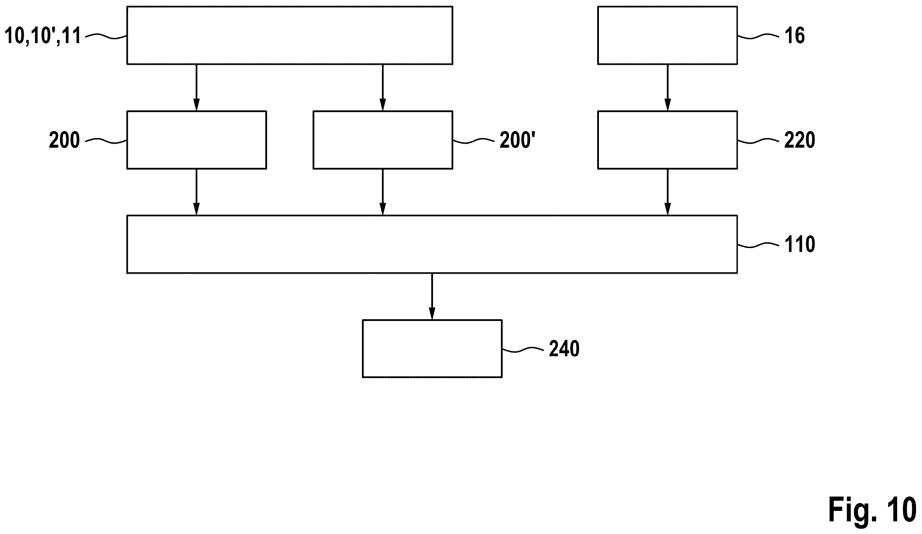

In einer weiteren optionalen Ausführungsform kann es vorgesehen sein, dass zusätzlich zum Erfassen des Objekts 2 vermittels wenigstens eines ereignisbasierten Bildsensors 11 ein Erfassen des zumindest einen Objekts 2 durch ein zeitgesteuertes Erfassungsmittel 16 (konventionelle Kamera, z. B. CCD-Kamera) zum Erzeugen einer Bildinformation 220 des Objekts 2 ausgeführt wird, wobei die Bildinformation 220 mit zumindest einer Sensorinformation 200, 200' des wenigstens einen ereignisbasierten Bildsensors 11 zu einer das Objekt 2 beschreibenden Objektinformation 210 zusammengeführt wird bzw. eine entsprechendes Zusammenführen 110 erfolgt, vgl. Figur 10. Damit kann als Ergebnis der allgemeinen verfahrensgemäßen Erfassung des Objekts 2 neben den aus einem ereignisbasierten Bildsensor 11 erfassten Sensorinformation 200 zusätzlich eine konventionelle Bildinformation 220 erfasst und für eine Eigenschaftsbestimmung des Objekts 2 herangezogen werden. Beispielsweise

In Figur 4 ist ein weiterer Vergleich eines konventionellen Erfassungsmittels (z. B. CCD-Kamera) und einem ereignisbasierten Bildsensor 11 bei der Erfassung eines Tropfens gezeigt. Der jeweils durch das (konventionelle) Erfassungsmittel 16 bzw. durch den ereignisbasierten Bildsensor 11 erfasste Bildausschnitt (auch "field of view (FOV)") genannt. Diese Bildausschnitte sind durch die rechteckigen Kästen, s. Pfeil 35, symbolisiert.

Es ist erkennbar, dass während zwei aufeinanderfolgender Bildinformationen 220 des konventionellen Erfassungsmittels eine Vielzahl an Sensorinformationen 200, 200' des ereignisbasierten Bildsensors 11 erzeugt werden. Dabei ist es möglich, die Sensorinformationen 200, 200' bzw. die in deren Bildausschnitten jeweils enthaltenen Teilinformationen zu einem Objekt 2 zusammenzuführen. Hierzu kann ein Algorithmus verwendet werden, der ein Zusammenfügen von Teilsensorinformationen unter Berücksichtigung von Überschneidungsbereichen ermöglicht. Dies kann dazu führen, dass ein Bild eines gesamten Objektes 2 erstellt werden kann, obwohl das Objekt nie gänzlich auf einem Bildausschnitt abbildbar ist.

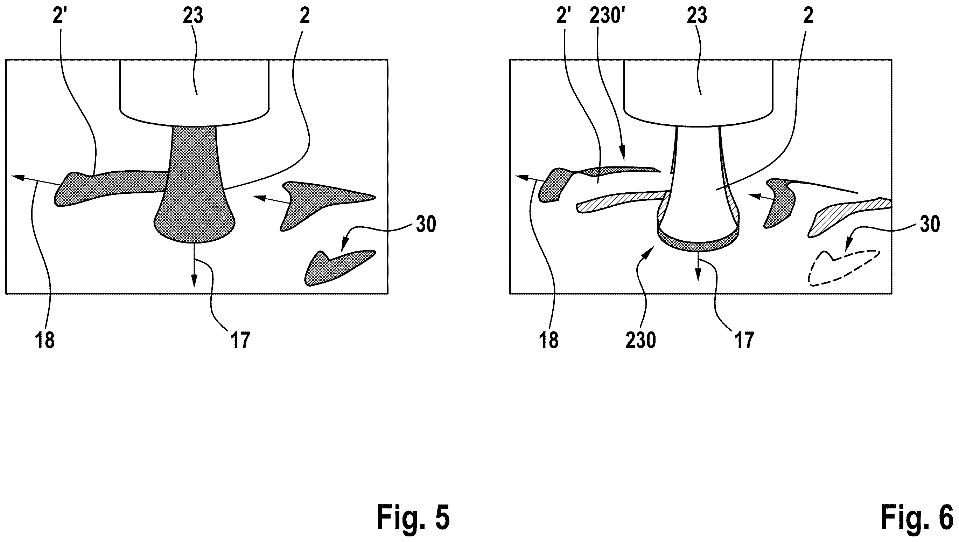

Während des sensorgestützten Erfassens kann sich beispielsweise wenigstens ein erstes Objekt 2 in eine erste Richtung 17 und wenigstens ein zweites Objekt 2' in eine zweite, von der ersten Richtung 17 abweichende Richtung 18 bewegen, wobei die aus dem ereignisbasierten Bildsensor 11 erfasste Sensorinformation 200 eine erste, dem ersten Objekt 2 zugeordnete Teilsensorinformation 230 und eine zweite, dem zweiten Objekt 2 zugeordnete Teilsensorinformation 230' beschreibt. Hierzu werden in der Auswertung der Sensorinformation 200 "gerichtete", d. h. in Bewegungsrichtungen erfolgende Veränderungen separaten Objekten oder separaten Objektabschnitten zugeordnet, um objektzugeordnete Eigenschaftsinformationen abzuleiten bzw. zu beschreiben. In Figur 5 ist eine Situation dargestellt, in welcher ein Tropfen 7 aus einer Applikationseinrichtung 23 ausgegeben wird. Der Tropfen 7 bewegt sich in eine erste Bewegungsrichtung 17. Gleichzeitig zum Applizieren des Tropfens 7 bewegt sich ein Hintergrundobjekt (zweites Objekt 2') in eine zweite Bewegungsrichtung 18. In einer, wie in Figur 5 gezeigten konventionellen Bilderfassung kann keine Unterschied zwischen dem Tropfen 7 und dem Hintergrundobjekt erfolgen. Ein normales Kamerasystem bzw. eine konventioneller Auswertealgorithmus kann den Tropfen 7 und das Hintergrundobjekt (zweites Objekt 2') nicht unterscheiden. Dies liegt daran, dass die unterschiedlichen Bewegungsvektoren bzw. die unterschiedlichen Bewegungsrichtungen durch ein einzelnes Kamerabild (träge konventionelles Kamerasystem) nicht erkennbar sind. Zum Vergleich hierzu wird in Figur 6 ein Sensorinformation 200 eines ereignisbasierten Bildsensors 11 gezeigt, dieser zeigt diskrete Abschnitte und kann einen zeitlichen Verlauf der Objekte 2, 2', insbesondere bzgl. einer richtungsspezifischen Bewegung, erkennen bzw. Angeben. Folglich können in einer Auswertung ein erstes Objekt 2, z. B. ein Tropfen 7, von einem zweite Objekt 2', z. B. einem sich bewegenden Hintergrundobjekt, unterschieden werden. Weitere Objekte, welche keine Bewegung ausführen, vgl. Pfeil 30, werden in der Sensorinformation 200 des ereignisbasierten Bildsensors 11 nicht angegeben, da diese keine Bewegung ausführen und folglich durch den ereignisbasierten Bildsensor 11 nicht erfasst werden.

Das erste Objekt 2 kann beispielsweise ein sich vor einem Hintergrund bewegendes Objekt 2 sein, wobei das zweite Objekt 2' ein dem Hintergrund zuzuordnender Bestandteil ist. Bevorzugt ist das zweite Objekt 2' ein Trägerkörper, auf welchen das erste Objekt 2 aufgebracht wird bzw. aufzubringen ist. So kann das erste Objekt 2 z. B. ein Bonddraht oder ein elektronisches Bauteil sein, das auf ein zweites Objekt 2', z. B. auf eine Leiterplatte oder auf einen auf eine Leiterplatte anzubringenden Trägerkörper, aufgebracht wird.

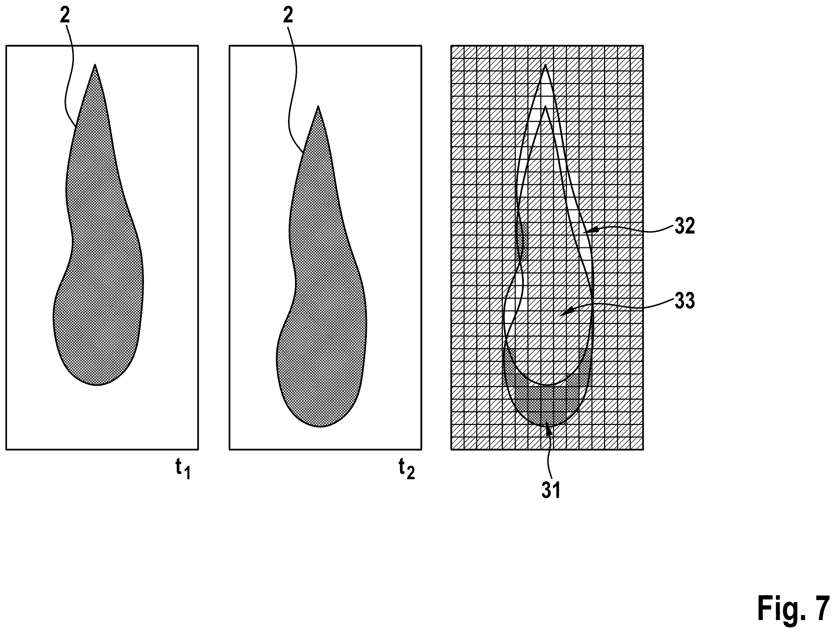

In Figur 7 ist beispielhaft eine Sensorinformation 200 eines ereignisbasierten Bildsensors 11 für eine Erfassung eines Tropfens 7 dargestellt, s. rechte Abbildung. Die linke und mittlere Abbildung, zeigen einen Tropfen 7 durch eine konventionelle Bildkamera (z. B. CCD-Kamera) zu zwei unterschiedlichen Zeitpunkten aufgenommen. Hierbei ist anzumerken, dass die konventionellen Kameras typischerweise nicht derart schnell Serienaufnahmen vornehmen können, als dies in einer Zeitabfolgebetrachtung eines ereignisbasierten Bildsensors möglich wäre. Im direkten Vergleich der Sensorinformation 200 aus dem ereignisbasierten Bildsensor 11 und den beiden Darstellungen der konventionellen Kamera ist erkennbar, dass die Sensorinformation 200 drei unterschiedliche Werte ausgibt: ein schwarzer Pixel - vgl. Pfeil 31 - bedeutet, dass ein zeitlich, insbesondere unmittelbar, vorher heller, also durch wenigstens einen Lichtstrahl belichteter Abschnitt der Sensoroberfläche, nun abgedunkelt vorliegt; ein weißer Pixel - vgl. Pfeil 32 - bedeutet, dass ein zeitlich, insbesondere unmittelbar, vorher abgedunkelter bzw. abgeschatteter Abschnitt der Sensoroberfläche, nun durch den Lichtstrahl 3, 4 beleuchtet wird; ein grauer Pixel - vgl. Pfeil 33 - bedeutet, dass der entsprechende Abschnitt der Sensoroberfläche im Vergleich zu einem zeitlich, insbesondere unmittelbar, vorher liegenden Zeitpunkt keine Helligkeitsveränderung erfahren hat, also dass dieser Abschnitt immer noch belichtet wird oder immer noch abgedunkelt bzw. abgeschattet vorliegt.

Es ist möglich, dass in einer ersten Phase eine Geschwindigkeit der Bewegung 19 des wenigstens einen Objekts 2 und zumindest einer Maßgröße des wenigstens einen Objekts 2, z. B. dessen Erstreckung senkrecht zu seiner Bewegungsrichtung 15, und in zumindest einer zweiten Phase eine Geschwindigkeit der Bewegung des Objekts 2 und zumindest eine Maßgröße des wenigstens einen Objekts 2, insbesondere durch zumindest den ereignisbasierten Bildsensor 11, erfasst werden. Diese Sensorinformationen 200 können dabei zum Abschätzen wenigstens eines Volumenbestandteils, bevorzugt des Gesamtvolumens, des wenigstens einen Objekts 2 verwendet werden.

In einer optionalen Ausführungsform kann wenigstens eine Geschwindigkeit und/oder wenigstens eine Abmessung und/oder eine zurückgelegte Wegstrecke eines Objekts 2, insbesondere eines Tropfens 7, vermittels zumindest des ereignisbasierten Bildsensors 11 ermittelt werden und aus dieser bzw. diesen Sensorinformationen 200 eine eine Veränderung der Werte beschreibende Veränderungsinformation ermittelt werden. Die hierbei vorliegenden Werte einer Veränderung können einen Geschwindigkeitswert und/oder einen Abmessungswert und/oder einen eine Form beschreibenden Wert und/oder einen Wegstreckenwert des wenigstens einen Objekts 2 betreffen.

Die Veränderungsinformation kann beispielsweise dazu eingesetzt werden, eine Betrieb- und/oder Zustandsinformation über einen, das wenigstens eine erfasste Objekt 2 in Bewegung versetzt habenden Antriebsprozess, abzuleiten bzw. zu bestimmen. Beispielsweise kann vermittels der Veränderungsinformation beispielsweise eine Betriebs- und/oder Zustandsinformation eines das Objekt 2 applizierenden Applikationsprozesses abgeleitet bzw. bestimmt werden.

Zum Ausführen des beschriebenen Verfahrens kann eine Vorrichtung 1 zum Erfassen wenigstens eines Objekts 2 eingesetzt werden, die zumindest eine Leuchteinrichtung 21, 22 zum Aussenden wenigstens eines Lichtstrahls 3, 4 der das wenigstens eine zu erfassende Objekt 2, 2' belichtet umfasst. Ferner umfasst die Vorrichtung 1 wenigstens einen optischen Sensor 10, 10' zum Erfassen, insbesondere eines Konturabschnitts, des wenigstens einen Objekts 2, 2' durch ein Auftreffen des wenigstens einen Lichtstrahls 3, 4 und/oder durch ein Abbilden eines durch eine Belichtung des wenigstens einen Objekts 2, 2' mit dem wenigstens einen Lichtstrahl 3, 4 erzeugten Schattenabschnitts 5 auf dem wenigstens einen optischen Sensor 10, 10', wobei eine Relativbewegung 6 zwischen dem wenigstens einen Objekt 2, 2' und dem optischen Sensor 10, 10' während des Erfassens ausführbar ist. Die Vorrichtung 1 zeichnet sich dadurch aus, dass der wenigstens eine optische Sensor 10, 10' ein ereignisbasierter Bildsensor 11 ist.

Auch kann die hierin beschriebene Vorrichtung 1 zum Erfassen wenigstens eines Objekts 2, 2 Teil einer Anordnung sein, die zusätzlich eine Applikations- und/oder Antriebseinrichtung 23, 24 umfasst, wobei die Antriebseinrichtung 24 zum in Bewegung versetzen bzw. die Applikationseinrichtung 23 zum Applizieren eines Objekts 2, 2' eingerichtet ist. Ferner ist die Anordnung eingerichtet, dass zumindest eine Betriebs- und/oder Zustandsinformation der Applikations- und/oder Antriebseinrichtung 23, 24 in Abhängigkeit einer Sensorinformation 200 des wenigstens einen optischen Sensors 10, 10' ermittelt wird bzw. ermittelbar ist.

## BEZUGSZEICHENLISTE

| 1 | Vorrichtung |
|---|---|
| 2 | Objekt |
| 2' | zweites Objekt |
| 3 | erster Lichtstrahl |
| 4 | zweiter Lichtstrahl |
| 5 | Schattenabschnitt |

6 Relativbewegung zwischen 2 und 10, 10'
7 Tropfen
8 Festkörper
9 Drehachse von 2, 8
10, 10' optischen Sensor
11 ereignisbasierter Bildsensor
12 Breite von 2
13 Erfassungsbereich
14 Länge von 2
15 Bewegungsrichtung von 2
16 zeitgesteuertes Erfassungsmittel
17 Richtung von 2
18 Richtung von 2'
19 Bewegung von 2
20 Bewegung von 2'
21 erste Leuchteinrichtung
22 weitere Leuchteinrichtung
23 Applikationseinrichtung
24 Antriebseinrichtung
25 Drehbewegung von 2, 8
26 Hüllvolumen
27 Datenverbindung
28 Rechnereinheit
29 Schneide
30 Pfeil
31 Pfeil (schwarzer Pixel)
32 Pfeil (Weißer Pixel)
33 Pfeil (Grauer Pixel)
34 Wegstrecke
35 Pfeil
36 Satellitentropfen
37 Auftrefffläche
38 Abstand zwischen 37 und 39
39 Austrittsöffnung von 24

100 Zusammenführen von 200 und 200'
110 Zusammenführen von 200, 200' und 220

200 Sensorinformation
210 Objektinformation
220 Bildinformation
230 erste Teilsensorinformation
230' zweite Teilsensorinformation

**Patentansprüche**

1. Verfahren zum Erfassen wenigstens eines Objekts (2), mit den folgenden Verfahrensschritten:

   - Aussenden wenigstens eines Lichtstrahls (3, 4), der das wenigstens eine zu erfassende Objekt (2) belichtet,
   - Erfassen, insbesondere eines Konturabschnitts, des wenigstens einen Objekts (2) durch ein Auftreffen des wenigstens einen Lichtstrahls (3, 4) und/oder durch ein Abbilden eines durch eine Belichtung des wenigstens einen Objekts (2) mit dem Lichtstrahl (3, 4) erzeugten Schattenabschnitts (5) auf wenigstens einem optischen Sensor (10, 10'),
   - Ausführen einer Relativbewegung (6) zwischen dem wenigstens einen Objekt (2) und dem optischen Sensor (10, 10') während des Erfassens, **dadurch gekennzeichnet, dass**
   - als wenigstens ein optischer Sensor (10, 10') ein ereignisbasierter Bildsensor (11) verwendet wird.

2. Verfahren nach Anspruch 1, **dadurch gekennzeichnet, dass** das wenigstens eine Objekt (2) im Durchlichtverfahren von dem wenigstens einen Lichtstrahl (3, 4) angestrahlt und zumindest abschnittsweise am optischen Sensor (10, 10') erfasst wird.

3. Verfahren nach Anspruch 1 oder 2, **dadurch gekennzeichnet, dass** als zu erfassendes Objekt (2) ein von einer Flüssigkeit gebildeter Tropfen (7) verwendet wird bzw. vorliegt.

4. Verfahren nach einem der Ansprüche 1 bis 3, **dadurch gekennzeichnet, dass** als zu erfassendes Objekt (2) ein Festkörper (8) verwendet wird bzw. vorliegt, bevorzugt führt der Festkörper (8) eine um eine Drehachse (9) drehende Bewegung aus, besonders bevorzugt ist die Drehachse (9) innerhalb des Volumens des Objekts (2) angeordnet.

5. Verfahren nach einem der vorhergehenden Ansprüche, **dadurch gekennzeichnet, dass** ein erster und wenigstens ein zweiter Lichtstrahl (3, 4) jeweils das Objekt (2) belichten, wobei

   - durch Auftreffen des ersten Lichtstrahls (3) und/oder durch Abbilden eines durch Belichtung des Objekts (2) mit dem ersten Lichtstrahl (3) erzeugten Schattenabschnitts (5) und
   - durch Auftreffen wenigstens des zweiten Lichtstrahls (4) und/oder durch Abbilden eines durch Belichtung des Objekts (2) mit dem wenigstens einen zweiten Lichtstrahl (4) erzeugten Schattenabschnitts (5)

   auf wenigstens einem optischen Sensor (10, 10') zumindest ein Abschnitt, insbesondere ein Konturabschnitt, des Objekts (2) erfasst wird, bevorzugt kreuzen sich der erste und wenigstens der zweite Lichtstrahl (3, 4) vor und/oder während und/oder nach der jeweiligen Belichtung des Objekts (2).

6. Verfahren nach einem der vorhergehenden Ansprüche, **dadurch gekennzeichnet, dass** ein Erzeugen einer Objektabbildinformation erfolgt, die ausgehend von einer von dem wenigstens einen optischen Sensor (10, 10') erzeugten Sensorinformation (200), unter Berücksichtigung eines Unterschieds in der Wellenlänge und/oder in den Wellenlängenbereichen des ersten und des wenigstens einen zweiten Lichtstrahls (3, 4), zumindest einen dem ersten und/oder dem wenigstens einen zweiten Lichtstrahl (3, 4) zugeordneten Sensorinformationsanteil beschreibt.

7. Verfahren nach einem der vorhergehenden Ansprüche, **dadurch gekennzeichnet, dass** ein Volumenstrom des sich bewegenden Objekts (2), insbesondere wenigstens einer sich bewegenden Flüssigkeit, zumindest durch eine Sensorinformation (200) des optischen Sensors (10, 10') ermittelt wird, bevorzugt wird der Volumenstrom des sich bewegenden Objekts (2) unter Verwendung der nachfolgenden Formel ermittelt wird:

$$\dot{V}(z,\ t) = v(z,\ t) \cdot \left(\frac{b(z,t)}{2}\right)^2 \cdot \pi,$$

wobei

$\dot{V}(z, t)$ den Volumenstrom zu einem Zeitpunkt t in z-Richtung an einer abgebildeten Position z charakterisiert,
$v(z, t)$ die Geschwindigkeit eines Teils des Objekts (2) oder das Objekt, insbesondere eines Tropfens (7), in z-Richtung und an einer abgebildeten Position z abbildet und
$b(z, t)$ die Breite (12) des Tropfens (7) zum Erfassungszeitpunkt t an einer abgebildeten Position z beschreibt.

8. Verfahren nach Anspruch 7, **dadurch gekennzeichnet, dass** der Volumenstrom des sich bewegenden Objekts (2) unter Verwendung der nachfolgenden Formel ermittelt wird:

$$\dot{V}(z,\ t) = v(z,\ t) \cdot b_1(z,\ t) \cdot b_2(z,\ t)\ \cdot \frac{\pi}{4},$$

wobei

$\dot{V}(z, t)$ den Volumenstrom zu einem Zeitpunkt t in z-Richtung an einer abgebildeten Position z charakterisiert,
$v(z, t)$ die Geschwindigkeit eines Teils des Objekts (2) oder des Objekts (2), insbesondere eines Tropfens (7), zum Zeitpunkt t in z-Richtung an einer abgebildeten Position z abbildet und
$b_1(z, t)$ die Breite (12) des Tropfens (7) zum Erfassungszeitpunkt t bezogen auf den ersten Lichtstrahl (3, 4) und
$b_2(z, t)$ die Breite (12) des Tropfens (7) zum Erfassungszeitpunkt t bezogen auf den wenigstens einen zweiten Lichtstrahl beschreibt.

9. Verfahren nach einem der vorhergehenden Ansprüche, **dadurch gekennzeichnet, dass** zu einem ersten Zeitpunkt eine erste Sensorinformation (200) des Objekts (2) und zu wenigstens einem zweiten Zeitpunkt wenigstens eine zweite Sensorinformation (200') des Objekts (2) durch den optischen Sensor (10, 10') erzeugt wird, wobei ein Zusammenführen (140) der ersten und der wenigstens einen zweiten Sensorinformation (200, 200') zur Bildung einer Objektinformation (210) erfolgt, insbesondere gibt die Objektinformation eine Länge (14) des Objekts (2) entlang seiner Bewegungsrichtung (15) beschreibende Längeninformation an.

10. Verfahren nach einem der vorhergehenden Ansprüche, **gekennzeichnet durch** Erfassen des Objekts (2) durch ein zeitgesteuertes Erfassungsmittel (16) zum Erzeugen einer Bildinformation (220) des Objekts (2), wobei die Bildinformation (220) mit zumindest einer Sensorinformation (200, 200') des ereignisbasierten Bildsensors (11) zu einer das Objekt (2) beschreibenden Objektinformation (210) zusammengeführt wird.

11. Verfahren nach einem der vorhergehenden Ansprüche, **dadurch gekennzeichnet, dass** während des sensorgestützten Erfassens sich wenigstens ein erstes Objekt (2) in eine erste Richtung (17) und wenigstens ein zweites Objekt (2') in eine zweite, von der ersten Richtung (17) abweichende Richtung (18) bewegt und die aus dem ereignisbasierten Bildsensor (11) erfasste Sensorinformation (200, 200') eine erste, dem ersten Objekt (2) zugeordnete Teilsensorinformation (230) und eine zweite, dem zweiten Objekt (2) zugeordnete Teilsensorinformation (230') beschreibt, bevorzugt ist das erste Objekt (2) ein sich vor einem Hintergrund bewegendes Objekt (2) und das zweite Objekt (2') ein dem Hintergrund zuzuordnender Bestandteil, besonders bevorzugt ist das zweite Objekt (2') ein Trägerkörper, auf welchen das erste Objekt (2) aufgebracht wird bzw. aufzubringen ist.

12. Verfahren nach einem der vorhergehenden Ansprüche, **dadurch gekennzeichnet, dass** in einer ersten Phase eine Geschwindigkeit der Bewegung (19) des wenigstens einen Objekts (2) und zumindest einer Maßgröße des wenigstens einen Objekts (2), z. B. dessen Erstreckung senkrecht zu seiner Bewegungsrichtung (15), und in zumindest einer zweiten Phase eine Geschwindigkeit der Bewegung des Objekts (2) und zumindest eine Maßgröße des wenigstens einen Objekts (2), insbesondere durch zumindest den ereignisbasierten Bildsensor (11), erfasst werden und diese Sensorinformation (200, 200') zum Abschätzen wenigstens eines Volumenbestandteils, bevorzugt des Gesamtvolumens, des wenigstens einen Objekts (2) verwendet wird.

**13.** Verfahren nach einem der vorhergehenden Ansprüche, **dadurch gekennzeichnet, dass** wenigstens eine Geschwindigkeit und/oder wenigstens eine Abmessung und/oder eine zurückgelegte Wegstrecke eines Objekts (2), insbesondere eines Tropfens (7), vermittels zumindest des ereignisbasierten Bildsensors (11) ermittelt wird bzw. werden und aus dieser bzw. diesen Sensorinformation(en) (200, 200') eine eine Veränderung der Werte beschreibende Veränderungsinformation ermittelt wird, bevorzugt wird die Veränderungsinformation eingesetzt, eine Betrieb- und/oder Zustandsinformation über einen, das wenigstens eine erfasste Objekt (2) in Bewegung versetzt habenden Antriebsprozess, insbesondere einen das Objekt (2) applizierenden Applikationsprozess, abzuleiten.

**14.** Vorrichtung (1) zum Erfassen wenigstens eines Objekts (2), umfassend

- zumindest eine Leuchteinrichtung (21, 22) zum Aussenden wenigstens eines Lichtstrahls (3, 4) der das wenigstens eine zu erfassende Objekt (2, 2') belichtet,
- wenigstens einen optischen Sensor (10, 10') zum Erfassen, insbesondere eines Konturabschnitts, des wenigstens einen Objekts (2, 2') durch ein Auftreffen des wenigstens einen Lichtstrahls (3, 4) und/oder durch ein Abbilden eines durch eine Belichtung des wenigstens einen Objekts (2, 2') mit dem wenigstens einen Lichtstrahl (3, 4) erzeugten Schattenabschnitts (5) auf dem wenigstens einen optischen Sensor (10, 10'), wobei eine Relativbewegung (6) zwischen dem wenigstens einen Objekt (2, 2') und dem optischen Sensor (10, 10') während des Erfassens ausführbar ist, **dadurch gekennzeichnet, dass**

der wenigstens eine optische Sensor (10, 10') ein ereignisbasierter Bildsensor (11) ist.

**15.** Anordnung umfassend eine Vorrichtung (1) zum Erfassen wenigstens eines Objekts (2, 2') nach Anspruch 20 sowie eine Applikations- und/oder Antriebseinrichtung (23, 24) die zum in Bewegung versetzen und/oder zum Applizieren eines Objekts (2, 2') eingerichtet ist, wobei zumindest eine Betriebs- und/oder Zustandsinformation der Applikations- und/oder Antriebseinrichtung (23, 24) in Abhängigkeit einer Sensorinformation (200, 200') des wenigstens einen optischen Sensors (10, 10') ermittelt wird.

Fig. 1

**Fig. 2**

EP 4 722 766 A1

Fig. 3

Fig. 4

Fig. 6

Fig. 5

Fig. 7

Fig. 8

Fig. 9

Fig. 10

**EUROPÄISCHER RECHERCHENBERICHT**

Nummer der Anmeldung

EP 25 20 6001

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2022/194676 A1 (PROPHESEE [FR]) 22. September 2022 (2022-09-22) | 1-3,9, 10,12-15 | INV. G01V8/12 |
| Y | * Abbildungen 1,4,6-8 * <br> * Seite 1, Zeile 21 - Seite 3, Zeile 9 * <br> * Seite 7, Zeilen 6-11 * <br> * Seite 8, Zeilen 3-15 * <br> ----- | 5-8,11 | G01V8/20 G01B11/24 G01F22/00 B23Q17/24 |
| X | EP 3 813 355 A1 (SICK AG [DE]) 28. April 2021 (2021-04-28) <br> * Abbildungen 1,4 * <br> * Absätze [0012] - [0029] * <br> ----- | 1,4,14 | |
| Y | DE 10 2023 107515 A1 (DROPTICAL GMBH [DE]) 26. September 2024 (2024-09-26) <br> * Abbildungen 6,7 * <br> * Absätze [0005] - [0032] * <br> ----- | 5-8,11 | |
| A | DE 101 53 581 A1 (HEILIG & SCHWAB GMBH [DE]) 15. Mai 2003 (2003-05-15) <br> * das ganze Dokument * <br> ----- | 1-15 | |
| A | EP 3 839 476 A1 (TECAN TRADING AG [CH]) 23. Juni 2021 (2021-06-23) <br> * das ganze Dokument * <br> ----- | 1-15 | RECHERCHIERTE SACHGEBIETE (IPC) <br> G01V G01B G01F |
| A | XIAO CHUNYUAN ET AL: "Speckle-Projection-Based High-Speed 3D Reconstruction Using Event Cameras", 2023 16TH INTERNATIONAL CONGRESS ON IMAGE AND SIGNAL PROCESSING, BIOMEDICAL ENGINEERING AND INFORMATICS (CISP-BMEI), IEEE, 28. Oktober 2023 (2023-10-28), Seiten 1-6, XP034499444, DOI: 10.1109/CISP-BMEI60920.2023.10373309 [gefunden am 2024-01-02] * das ganze Dokument * <br> ----- | 1-15 | G01N B23Q |

Der vorliegende Recherchenbericht wurde für alle Patentansprüche erstellt

| Recherchenort | Abschlußdatum der Recherche | Prüfer |
|---|---|---|
| Den Haag | 3. Februar 2026 | Parmentier, Hélène |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

EP 4 722 766 A1

**ANHANG ZUM EUROPÄISCHEN RECHERCHENBERICHT**
**ÜBER DIE EUROPÄISCHE PATENTANMELDUNG NR.**          EP 25 20 6001

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2026

| Im Recherchenbericht angeführtes Patentdokument | Datum der Veröffentlichung | Mitglied(er) der Patentfamilie | Datum der Veröffentlichung |
|---|---|---|---|
| WO 2022194676 A1 | 22-09-2022 | CN 117063057 A | 14-11-2023 |
| | | EP 4060317 A1 | 21-09-2022 |
| | | EP 4308901 A1 | 24-01-2024 |
| | | JP 2024512452 A | 19-03-2024 |
| | | KR 20230156393 A | 14-11-2023 |
| | | US 2024169577 A1 | 23-05-2024 |
| | | WO 2022194676 A1 | 22-09-2022 |
| EP 3813355 A1 | 28-04-2021 | CN 112710283 A | 27-04-2021 |
| | | DE 102019128814 A1 | 29-04-2021 |
| | | DK 3813355 T3 | 05-09-2022 |
| | | EP 3813355 A1 | 28-04-2021 |
| | | JP 7124030 B2 | 23-08-2022 |
| | | JP 2021068451 A | 30-04-2021 |
| | | US 2021125362 A1 | 29-04-2021 |
| DE 102023107515 A1 | 26-09-2024 | KEINE | |
| DE 10153581 A1 | 15-05-2003 | KEINE | |
| EP 3839476 A1 | 23-06-2021 | CN 112986236 A | 18-06-2021 |
| | | EP 3839476 A1 | 23-06-2021 |
| | | US 2021181223 A1 | 17-06-2021 |

Für nähere Einzelheiten zu diesem Anhang : siehe Amtsblatt des Europäischen Patentamts, Nr.12/82